# EUROPÄISCHE PATENTANMELDUNG

(11) **EP 4 640 287 A1**
(43) Veröffentlichungstag der Anmeldung: **29.10.2025**
(21) Anmeldenummer: 25170585.1
(22) Anmeldetag: 15.04.2025
(51) Int. Cl.: A62C 35/68, A62C 37/50, F16J 15/18, G01M 3/04, G01M 3/26

(54) **ÜBERWACHUNGSVORRICHTUNG UND VERFAHREN FÜR EINEN SPRINKLERPUMPENTESTLAUF**

(30) Priorität: 24.04.2024 DE 102024111475
(71) Anmelder: MECON GmbH, 51491 Overath (DE)
(72) Erfinder: Böke, Dr. Joachim, 40625 Düsseldorf (DE); Friede, Frank, 23909 Ratzeburg (DE); Derksen, Alexander, 23847 Grinau (DE)
(74) Vertreter: Stork Bamberger Patentanwälte PartmbB

(57) **Zusammenfassung**

Die Erfindung betrifft eine Überwachungsvorrichtung (1) für einen Pumpentestlauf einer Sprinklerpumpe (2), wobei die Sprinklerpumpe (2) zumindest ein, einen Nassraum umgebendes Pumpengehäuse (3.1), eine mittels einer Stopfbuchsdichtung (5) gegen das Pumpengehäuse (3.1) gedichtet angeordnete Antriebswelle (4) und einen mit der Antriebswelle (4) mechanisch gekoppelten Antrieb (A) umfasst, wobei die Stopfbuchsdichtung (5) für den Durchtritt von Leckagefluids (LF) vom Pumpengehäuse (3.1) in einen Trockenraum ausgebildet und eingerichtet ist. Die Überwachungsvorrichtung (1) umfasst eine zum Erfassen des während des Pumpentestlaufes aus dem Pumpengehäuse (3.1) über die Stopfbuchsdichtung (5) in den Trockenraum durchtretenden Leckagefluidfluids (LF) eingerichtete Messeinheit (6) und ist ausgebildet, im Fall einer Unterschreitung eines vorgegebenen Mindestdurchtritts ein Stoppsignal (Sₛₜₒₚ) zur Abschaltung der Sprinklerpumpe (2) und/oder ein Alarmsignal zu erzeugen. Ferner betrifft die Erfindung ein Verfahren zur Überwachung eines Pumpentestlaufes einer Sprinklerpumpe (2).

## Beschreibung

Die Erfindung betrifft eine Überwachungsvorrichtung für einen Pumpentestlauf einer Sprinklerpumpe, wobei die Sprinklerpumpe zumindest ein, einen Nassraum umgebendes Pumpengehäuse, eine mittels einer Stopfbuchsdichtung gegen das Pumpengehäuse gedichtet angeordnete Antriebswelle und einen mit der Antriebswelle mechanisch gekoppelten Antrieb umfasst, wobei die Stopfbuchsdichtung für den Durchtritt von Leckagefluid vom Pumpengehäuse in einen Trockenraum ausgebildet und eingerichtet ist.

Des Weiteren betrifft die Erfindung ein Verfahren zur Überwachung eines Pumpentestlaufes einer Sprinklerpumpe, wobei die Sprinklerpumpe zumindest ein, einen Nassraum umgebendes Pumpengehäuse, eine mittels einer Stopfbuchsdichtung gegen das Pumpengehäuse gedichtet angeordnete Antriebswelle und einen mit der Antriebswelle mechanisch gekoppelten Antrieb umfasst, wobei die Stopfbuchsdichtung für den Durchtritt von Leckagefluid vom Pumpengehäuse in den Trockenraum ausgebildet und eingerichtet ist.

Ein dritter Aspekt der Erfindung betrifft eine Überwachungsvorrichtung für eine Pumpe, wobei die Pumpe zumindest ein, einen Nassraum umgebendes Pumpengehäuse, eine mittels einer Stopfbuchsdichtung gegen das Pumpengehäuse gedichtet angeordnete Antriebswelle und einen mit der Antriebswelle mechanisch gekoppelten Antrieb umfasst, wobei die Stopfbuchsdichtung für den Durchtritt von Leckagefluid vom Pumpengehäuse in einen Trockenraum ausgebildet und eingerichtet ist.

Ferner betrifft die Erfindung eine Wasserlöschanlage.

Bei der Brandbekämpfung werden Wasserlöschanlagen, insbesondere Sprinkleranlagen, eingesetzt. Wesentlicher Funktionsbestandteil dieser Wasserlöschanlagen sind Pumpen, insbesondere Sprinklerpumpen, zur Förderung von Löschfluid. Nur im Brandfall und beim Pumpentestlauf wird die Sprinklerpumpe gestartet. Die Sprinklerpumpe fördert im Brandfall Löschfluid zu Düsen oder Sprinklern der Wasserlöschanlage. Als Löschfluid kommt Wasser oder Wasser mit Löschmittelzusätzen, wie beispielsweise Schaum oder Netzmittel, zum Einsatz. Unter Wasserlöschanlagen werden daher vorliegend sämtliche Löschanlagen verstanden, die mittels eines fluidförmigen Löschmittels, also eines flüssigen, gasförmigen oder einer Mischform daraus, betrieben werden.

Zur Erhaltung der Betriebsbereitschaft solcher Wasserlöschanlagen sind regelmäßige Kontrollen und Wartungen erforderlich. So schreibt beispielsweise die Richtlinie VdS 2212 z.B. wöchentliche Kontrollen durch den Anlagenbetreiber an der Wasserlöschanlage vor.

Da der zuverlässige Start der Pumpe zum Fördern des Löschfluids essentiell für das Funktionieren der Löschanlage ist, umfassen die Tests auch einen Pumpentestlauf.

Solche Pumpentestläufe dienen der Überprüfung der Funktionsfähigkeit der gesamten Kette der Komponenten in ihrer Wechselwirkung ausgehend von der Erzeugung eines Druckabfalls, der korrekten Funktionsfähigkeit von Druckschaltvorrichtungen bis hin zum Start der Sprinklerpumpe bzw. der Pumpen. Hierfür muss der jeweilige Pumpentestlauf so lange andauern, bis die normalen Betriebskennwerte der Pumpe erreicht sind.

Sprinklerpumpen sind in der Regel Kreiselpumpen, insbesondere in der Ausführung als Spiralgehäusepumpen. Kreiselpumpen, auch als dynamische Pumpen bezeichnet, sind ein Pumpentyp, der ein rotierendes Laufrad verwendet, um eine Strömung des Löschfluids zu erzeugen. Dies erfolgt, indem die Geschwindigkeit des Löschfluids erhöht wird. Diese Pumpen arbeiten, indem sie einen kontinuierlichen Fluss erzeugen, der eine Flüssigkeit, insbesondere das Löschfluid, von der Saugseite zur Druckseite der Pumpe bewegt.

Das Pumpengehäuse der Sprinklerpumpe umfasst regelmäßig einen Nassraum, in welchem das rotierende Laufrad das Löschfluid von der Saugseite zur Druckseite der Pumpe bewegt. Die Rotation des Laufrades wird über den Antrieb, welcher mit der Antriebswelle der Sprinklerpumpe mechanisch gekoppelt ist, erzeugt. Der Antrieb ist beispielsweise ein Dieselmotor oder ein Elektromotor.

Die Antriebswelle der Sprinklerpumpe erstreckt sich insbesondere vom Laufrad im Nassraum des Pumpengehäuses, über einen Trockenraum, der beispielsweise von einem Lagergehäuse umgeben sein kann, und vorzugsweise Lager zur Führung der Antriebswelle umfasst, bis zum Antrieb. Dieses Lagergehäuse ist insbesondere mit dem Pumpengehäuse verbunden.

Die Antriebswelle muss gegen das Pumpengehäuse abgedichtet werden. Eine Stopfbuchsdichtung ist eine wirtschaftliche Dichtungslösung. Beispielsweise wird als Dichtungsmaterial eine Packungsschnur verwendet, beispielsweise eine PTFE-Schnur, eine Filzschnur, eine getränkte Baumwollschnur oder eine Graphitschur, wobei die Packungsschnur um die Welle gewickelt und in eine Kammer eingepresst ist. Zeigt sich, dass die Leckrate - beispielsweise durch Verschleiß oder andere Einflussfaktoren - anwächst, so wird die Betätigung eines Einstellelements erforderlich, vorzugsweise eines Pressstempels oder eines Pressflansches, um die Dichtwirkung der Stopfbuchse nachzustellen. Ist das nicht mehr möglich, dann wird eine neue Packungsschnur eingelegt. Die Stopfbuchsdichtung ist ein Dichtelement, bei dem immer eine gewisse Undichtigkeit herrscht.

Somit ist die Stopfbuchsdichtung für den Durchtritt von Leckagefluid vom Pumpengehäuse in einen Trockenraum ausgebildet. Das Leckagefluid kühlt einerseits das Dichtungsmaterial und dient anderseits als Schmier- und/oder Gleitmittel. Bei diesem Durchtritt von Leckagefluid handelt es sich im Idealfall um geringe Mengen von Leckagefluid. Insbesondere wird bei der Inbetriebnahme der Sprinklerpumpe der Durchtritt von Leckagefluid mit dem Einstellelement so eingestellt, dass stets eine gewisse Menge an Leckagefluid durchtritt.

Das Leckagefluid umfasst insbesondere Wasser, wässrige Löschmittel oder sonstige gebräuchliche Löschmittel. Wenn nachfolgend von Leckagefluid die Rede ist, so kann damit stets auch jegliches Fluid gemeint sein, insbesondere Leckagewasser.

So schreibt beispielsweise die NFPA25 eine Leckagefluidmenge von mindestens einem Tropfen pro Sekunde vor, die nicht unterschritten werden darf.

Regelmäßig wird diese Leckagefluidmenge beim regelmäßigen Pumpentestlauf visuell bewertet, beispielsweise wird die Anzahl der Tropfen pro Zeiteinheit gezählt.

Weiterhin sind im Stand der Technik Lösungen bekannt, welche vermehrte Leckagen automatisch melden oder ein Überschreiten einer vorgegebenen maximalen Leckagefluidmenge melden.

So offenbart die DE 2 617 658 A1 eine Stopfbuchsdichtung mit an dieser angeschlossenem Kontroll- bzw. Steuersystem, das Einrichtungen aufweist, welche Undichtheiten der um eine polierte Kolbenstange angeordneten Dichtungen ermitteln bzw. feststellen und die durch Einstellen bzw. durch Verstellen dieser Dichtungen die Undichtheiten korrigieren bzw. beheben. Hierfür ist ein druckbetätigtes Kolbensystem zum Andruck dieser Dichtungen an der polierten Stange vorgesehen. Ferner sind weitere Einrichtungen vorgesehen, die dem Bedienungspersonal die Undichtheit melden.

Die DE 10 2019 135 815 A1 offenbart eine Wasserlöschanlage mit der Überwachung zumindest eines Parameterwerts eines Parameters, der indikativ für den Querschnitt einer Fluidumleitung ist. Ferner erfolgt die Verwendung dieses Parameterwertes zur Steuerung des Pumpentestlaufs einer Sprinklerpumpe.

Nachteilig an den bekannten Wasserlöschanlagen ist ferner, dass beim Pumpentestlauf die Menge des Leckagefluids visuell bewertet werden muss. Insbesondere ist es erforderlich, dass eine entsprechend geschulte Person während eines solchen Pumpentestlaufes vor Ort zur Überwachung anwesend sein muss. Die Durchführung eines solchen Pumpentestlaufes ist daher sehr personalintensiv. Zudem ist eine rein visuelle Beurteilung der Menge des Leckagefluids fehlerbehaftet und verhältnismäßig ungenau.

Nachteilig an den bekannten Überwachungsvorrichtungen von Leckagen an Stopfbuchsdichtungen ist, dass ausschließlich Fehlfunktionen der Stopfbuchsdichtung erkannt werden, die zu erhöhten Leckageraten bis hin zu vollständiger Undichtigkeit der Stopfbuchse führen.

Es ist daher Aufgabe der vorliegenden Erfindung, eine Überwachungsvorrichtung vorzuschlagen, die eine präzise und zuverlässige Erfassung des Leckagefluids, insbesondere von geringen Mengen, erlaubt. Weiter ist es Aufgabe der Erfindung, mögliche Beschädigungen und/oder Zerstörungen der Stopfbuchsdichtung durch Mangelschmierung und/oder Mangelkühlung möglichst frühzeitig zu erkennen und wirksam zu verhindern. Des Weiteren ist es Aufgabe, das Leckagefluid automatisiert und möglichst kostengünstig zu erfassen. Auch ist es Aufgabe der vorliegenden Erfindung ein entsprechendes Verfahren zur Überwachung bereitzustellen. Ferner ist es Aufgabe eine Wasserlöschanlage mit einer solchen Überwachungsvorrichtung bereitzustellen.

Die Aufgabe wird durch eine Überwachungsvorrichtung für einen Pumpentestlauf mit den eingangs genannten Merkmalen dadurch gelöst, dass die Überwachungsvorrichtung eine zum Erfassen des während des Pumpentestlaufes aus dem Pumpengehäuse über die Stopfbuchsdichtung in den Trockenraum durchtretenden Leckagefluids eingerichtete Messeinheit umfasst und ausgebildet ist, im Fall einer Unterschreitung eines vorgegebenen Mindestdurchtritts ein Stoppsignal zur Abschaltung der Sprinklerpumpe und/oder ein Alarmsignal zu erzeugen.

Auf diese Weise wird erstmalig sichergestellt, dass das Unterschreiten des vorgegebenen Mindestdurchtritts automatisiert und zuverlässig festgestellt wird. Somit werden andernfalls mögliche Schäden an der Stopfbuchsdichtung stets vermieden und Maßnahmen zur Korrektur ermöglicht. Hiermit wird sichergestellt, dass bei jedem Pumpentestlauf der vorgegebene Mindestdurchtritt von Leckagefluid gewährleistet ist und Verschleiß und Schäden der Stopfbuchdichtung aufgrund von Mangelschmierung und/oder Mangelkühlung stets vermieden werden.

Die Aufrechterhaltung des vorgegebenen Mindestdurchtritts schützt die Stopfbuchsdichtung vor erhöhten Reibungskräften und dadurch induzierte Hitzeeinwirkung auf die Stopfbuchse. Vorteilhafterweise wird so die Standzeit bzw. Lebensdauer der Stopfbuchsdichtung verlängert. So werden Dichteigenschaften der Stopfbuchsdichtung möglichst lange gewährleistet. Bei einem unerwünschten Funktionsverlust der Stopfbuchsdichtung treten regelmäßig große Mengen Leckagefluid aus, was einen so starken Druckabfall zur Folge hätte, dass die ausreichende Bereitstellung von Löschfluide an den Sprinkler/Düsen nicht mehr gewährleistet wäre, wodurch insgesamt der Löschvorgang gefährdet wäre. Die zuverlässige Funktion der Stopfbuchsdichtung ist somit insbesondere beim Start der Sprinklerpumpe im Brandfall gewährleistet.

Weiter bevorzugt ist die Messeinheit ausgebildet und eingerichtet, den Mindestdurchtritt quantitativ oder qualitativ zu erfassen. Unter quantitative Erfassung fällt beispielsweise eine volumetrische Bestimmung des Mindestdurchtritts. Die qualitative Erfassung ist beispielsweise eingerichtet, den Mindestdurchtritt optisch, beispielsweise mittel optischer Sensoren oder Kamera, zu erfassen. Die optische Erfassung umfasst bevorzugt eine Tropfenerfassung, einen Vergleich mit einem vorgegebenen Schwellwert oder einer Wasserstrahlerfassung. Die Messeinheit ist vorzugsweise ausgebildet, sehr geringe Leckagen zu erfassen.

Optional können Werte für die Menge des Leckagefluids festgesetzt werden. Setzt man beispielweise einen Wert von 0,05 ml für einen Tropfen Leckagefluid an, so ergibt sich für einen vorgegebenen Mindestdurchtritt von Leckagefluid von einem Tropfen pro Sekunde ein Volumenstromwert von 0,05 ml/s.

Eine zweckmäßige Ausgestaltung der Überwachungsvorrichtung ist dadurch gekennzeichnet, dass die Überwachungsvorrichtung ferner eine Steuereinheit aufweist, wobei die Steuereinheit mit der Messeinheit und dem Antrieb signalleitend verbunden ist, wobei die Steuereinheit oder die Messeinheit ausgebildet und eingerichtet ist, das Alarmsignal und/oder das Stoppsignal zur Abschaltung der Sprinklerpumpe zu erzeugen.

Vorzugsweise startet die Steuereinheit den Pumpentestlauf und erzeugt das Alarmsignal und/oder das Stoppsignal zur Abschaltung der Sprinklerpumpe. Insbesondere steuert die Steuereinheit die Messeinheit und erfasst Daten und Signale der Messeinheit und verarbeitet diese.

In einer bevorzugten Ausgestaltungsvariante wird die Messeinheit beispielsweise ausgewählt aus der Liste: Bildverarbeitungssysteme, Füllstandsmesssysteme, Wägezellen, mechanische Füllstandsmesser wie Schwimmer, Leitfähigkeitsmessungssysteme, kapazitive Messsysteme, optische Messsysteme oder Ultraschallsysteme.

Somit kommen unterschiedliche Messgrößen zur Bestimmung des Durchtritts von Leckagefluid und zur Prüfung, ob der Mindestdurchtritt unterschritten wird, zur Anwendung. Unter Erfassung des Durchtritts von Leckagefluid im Sinne der vorliegenden Erfindung und der Prüfung, ob der erfasste Durchtritt den vorgegebenen Mindestdurchtritt unterschreitet, ist vorzugweise zu verstehen, dass der erfassten Messgröße zur Bestimmung des Durchtritts von Leckagefluid ein entsprechender Zahlenwert zugeordnet oder zuordenbar ist. Auch ist es möglich, dass der Mindestdurchtritt in nicht quantifizierter Form, also rein qualitativ, erfasst wird.

Es können stellvertretende Messgrößen erfasst werden, beispielsweise die Zeiten bis zum Erreichen einer Füllhöhe, beispielsweise bei der Verwendung von Füllstandsmesssystemen.

Der erfasste Zahlenwert der Messgröße muss daher nicht notwendigerweise mit den tatsächlichen Volumenstromwerten des Leckagefluids übereinstimmen, sondern kann durch eine vorgegebene Zuordnungsvorschrift umgerechnet werden. Vorteilhafterweise korreliert der Zahlenwert mit einem Volumenstromwert. Vorzugweise wird dementsprechend auch für den vorgegebenen Mindestdurchtritt ein Zahlenwert vorgegeben.

In einer bevorzugten Ausgestaltung der Erfindung erfolgt die Erzeugung des Stoppsignals zur Abschaltung der Sprinklerpumpe und/oder des Alarmsignals, wenn der vorgegebene Mindestdurchtritt im Bereich eines Volumenstroms beispielsweise von 0,01 ml pro Sekunde bis 0,5 ml pro Sekunde, besonders bevorzugt im Bereich von 0,05 ml pro Sekunde bis 0,3 ml pro Sekunde liegt. Bei einem angenommenen oder geschätzten Volumen eines Wassertropfens von 0,05 ml liegt der bevorzugte Bereich für den vorgegebenen Mindestdurchtritt bei einem bis zehn Tropfen pro Sekunde, besonders bevorzugt im Bereich von einem bis sechs Tropfen pro Sekunde.

Eine weitere zweckmäßige Ausgestaltung der Überwachungsvorrichtung ist dadurch gekennzeichnet, dass die Messeinheit einen zur Erfassung des Leckagefluids eingerichteten Auffangbehälter umfasst und die Messeinheit ausgebildet ist, basierend auf wenigstens einer Füllhöhe das Leckagefluid in dem Auffangbehälter zu erfassen. Die wenigstens eine Füllhöhe dient vorzugsweise als Richtwert bzw. Maß zur Ermittlung der Menge des ausgetretenen Leckagefluids. Mit anderen Worten korrespondiert die Füllhöhe mit dem Durchtritt des Leckagefluids. Vorzugsweise bestimmt die Messeinheit dahingehend indirekt oder direkt, ob der in den Auffangbehälter gelangte Durchtritt dem vorgegebenen Mindestdurchtritt entspricht oder diesen sogar unterschreitet. Der erfindungsgemäße Auffangbehälter ist vorzugsweise als Sammelbehälter ausgebildet. Dies bietet den Vorteil, dass auch kleinste Durchtritte an Leckagefluid erfassbar sind, da der Auffangbehälter eine Sammelfunktion ausübt.

In einer bevorzugten Ausführung der Erfindung wird der Auffangbehälter unter einer Leckagefluidaustrittsöffnung des Lagergehäuses angeordnet. Somit gelangt das Leckagefluid vom Nassraum des Pumpengehäuses in den Trockenraum des Lagergehäuses und vorzugsweise über die Leckagefluidaustrittsöffnung in den Auffangbehälter.

Gemäß einer alternativen Ausbildung des Auffangbehälters ist dieser Teil eines zweiarmigen Hebels, der um eine Schwenkachse schwenkbar gelagert ist. Überschreitet das in den Auffangbehälter gelangte Leckagefluid eine vorgegebene Menge, so wird selbsttätig ein Kippmoment erzeugt, so dass sich der Auffangbehälter eigenständig entleert und das Verschwenken des Auffangbehälters zur Erfassung des Durchtritts herangezogen wird.

Eine weitere zweckmäßige Ausbildung der Überwachungsvorrichtung ist dadurch gekennzeichnet, dass die Messeinheit oder die Steuereinheit eingerichtet ist, bei einer Erstbefüllung des Auffangbehälters das Alarmsignal und/oder das Stoppsignal zur Abschaltung der Sprinklerpumpe zu erzeugen, wenn die wenigstens eine Füllhöhe des Leckagefluids im Auffangbehälter nicht in einer vordefinierten Erstbefüllungszeit t₀ erreicht wird.

Nach dem Start des Pumpentestlaufes beginnt durch den Druckaufbau im Pumpengehäuse der Durchtritt von Leckagefluid durch die Stopfbuchsdichtung. Das durch die Stopfbuchsdichtung tretende Fluid, vorzugsweise Wasser, gelangt als Leckagefluid vom Nassraum des Pumpengehäuses in den Trockenraum des Lagergehäuses. Dort benötigt es eine von der Oberflächenbeschaffenheit und Oberflächentopologie im Inneren des Lagergehäuses abhängige Sammelzeit, um über die Leckagefluidaustrittsöffnung in den Auffangbehälter zu gelangen. Somit berücksichtigt diese vordefinierte Erstbefüllungszeit t₀ eine Totzeit nach dem Pumpenteststart zur Erfassung der Unterschreitung des vorgegebenen Mindestdurchtritts. Vorzugsweise wird diese vordefinierten Erstbefüllungszeit t₀ bei der Inbetriebnahme der Sprinklerpumpe ermittelt, oder sie ist beispielsweise unabhängig von der Inbetriebnahme in Versuchsreihen für den entsprechenden Pumpentyp ermittelt worden.

Dies bietet den Vorteil, dass ein zu geringer Leckagefluiddurchtritt frühzeitig nach Ermittlung gemeldet wird. Eine Unterschreitung des vorgegebenen Mindestdurchtritts führt sogleich zur Erzeugung des Alarmsignals und/oder zur Abschaltung der Sprinklerpumpe, so dass infolgedessen durch die rechtzeitige Abschaltung Verschleiß und Schäden an der Stopfbuchsdichtung aufgrund von Mangelschmierung und/oder Mangelkühlung in jedem Fall vermieden werden.

Eine bevorzugte Weiterbildung der Erfindung zeichnet sich dadurch aus, dass die Messeinheit oder die Steuereinheit ausgebildet und eingerichtet ist zu prüfen, ob bei der Erstbefüllung des Auffangbehälters eine Erstbefüllungszeit t_{S0} bis zum Erreichen der wenigsten einen Füllhöhe eine erste Ungleichung t_{S0} < t₀ erfüllt, und ferner ausgebildet und eingerichtet ist, bei Erfüllung der ersten Ungleichung, Befüllungszeiten tₛ bis zum Erreichen der wenigsten einen Füllhöhe in weiteren Befüllungszyklen, zu erfassen.

Wenn durch die Messeinheit oder die Steuereinheit geprüft wurde, dass die erste Ungleichung t_{S0} < t₀ erfüllt ist und somit der vorgegebene Mindestdurchtritt nicht unterschritten wird, kann der Pumpentestlauf weiterlaufen. Vorzugsweise werden während des Pumpentestlaufes zur Feststellung der Unterschreitung des vorgegebenen Mindestdurchtritts des Leckagefluids die Befüllungszeiten tₛ bis zum Erreichen der wenigsten einen Füllhöhe in weiteren Befüllungszyklen erfasst.

Gemäß einer weiteren bevorzugten Ausgestaltung der Überwachungsvorrichtung ist an dem Auffangbehälter ein Absperrorgan angeordnet, und die Messeinheit oder die Steuereinheit ist ausgebildet und eingerichtet, beim Erreichen der wenigsten einen Füllhöhe das Absperrorgan zum Ablassen des gesammelten Leckagefluids zu öffnen und im Anschluss zu schließen, sowie eine Befüllungszykluszeit t_{Z} zwischen zwei aufeinanderfolgenden Befüllungen des Auffangbehälters bis zum Wiederreichen der wenigsten einen Füllhöhe zu erfassen, und das Alarmsignal und/oder das Stoppsignal zur Abschaltung der Sprinklerpumpe zu erzeugen, wenn t_{z} eine zweite Ungleichung t_{z} > t₁ erfüllt, wobei t₁ eine vordefinierte Befüllungszykluszeit ist.

Auf diese Weise wird sichergestellt, dass das gesammelte Leckagefluid regelmäßig abgelassen wird und damit sowohl eine Überfüllung vermieden als auch eine Leerung des Auffangbehälters erfolgt, um ein erneutes Ansammeln von Leckagefluid zur wiederkehrenden Erfassung des Durchtritts zu ermöglichen. Dies bietet den Vorteil, dass quasi kontinuierlich bzw. repetierend geringe Mengen Leckagefluid erfasst werden und so die Detektion einer Unterschreitung des vorgegebenen Mindestdurchtritts stets gewährleistet ist. In anderen Worten gewährleistet das Absperrorgan, dass beispielsweise die wenigstens eine Füllhöhe wiederholt erreicht werden muss und diese nicht dauerhaft oder für eine längere Zeit überschritten ist.

Alternativ ist das Absperrorgan insbesondere totraumvolumenfrei ausgebildet. Optional ist das Absperrorgan im Boden des Aufnahmebehälters angeordnet und eingerichtet, eine Öffnung in diesem steuervariabel freizugeben. Dies begünstigt insbesondere die Erfassung eines geringen Leckagedurchtritts.

Das Absperrorgan ist optional als Ventil, besonders bevorzugt als Magnetventil, ausgebildet. Dies bietet den Vorteil, dass das Leckagefluid steuerbar im Auffangbehälter gehalten wird und bei Bedarf kontrolliert und präzise ablassbar eingerichtet ist.

Vorzugsweise erfüllt die Befüllungszykluszeit t_{Z} die Gleichung t_{Z} = t_{S} + t_{A}, wobei t_{A} eine vordefinierte Ablasszeit zwischen Öffnung und Schließung des Absperrorgans zum Ablassen des gesammelten Leckagefluids ist. Die Zeit t_{S} ist die Befüllungszeit tₛ bis zum Erreichen der wenigsten einen Füllhöhe. Die Werte für t₀ und/oder t₁ werden beispielsweise vor oder bei der Inbetriebnahme der Überwachungsvorrichtung in der Messeinheit oder der Steuereinheit gespeichert.

Eine weitere bevorzugte Ausbildung der Überwachungsvorrichtung ist dadurch gekennzeichnet, dass in dem Auffangbehälter ein zum Erfassen des Leckagefluids eingerichteter Schwimmer beweglich angeordnet ist und die Messeinheit ausgebildet ist, anhand der Position des Schwimmers die wenigsten eine Füllhöhe zu erfassen. Vorteilhafterweise ist die erfindungsgemäße Überwachungsvorrichtung konstruktiv möglichst einfach ausgeführt und aufgrund ihrer geringen mechanischen Komplexität äußerst zuverlässig und wartungsarm.

Vorzugsweise umfasst die Messeinheit eine zur Bestimmung wenigstens einer Position des Schwimmers eingerichtete Positionsbestimmungseinrichtung. Die Positionsbestimmungseinrichtung ist eingerichtet, das Erreichen der wenigsten einen Füllhöhe des Schwimmers im Auffangbehälter zu erfassen. Auf diese Weise ist es möglich, anhand der wenigsten einen Füllhöhe auf den Durchtritt repräsentierenden Füllstand zu schließen.

Eine bevorzugte Weiterbildung der Erfindung zeichnet sich dadurch aus, dass die Positionsbestimmungseinrichtung mindestens einen am Auffangbehälter angeordneten Reed-Kontakt und mindestens ein mit dem Schwimmer verbundenes Magnetelement oder den aus einem magnetischen Material gebildeten Schwimmer umfasst. Dies stellt eine kosteneffektive konstruktive Ausgestaltung dar. Zudem sind die Betriebskosten einer solchen Lösung äußerst gering.

Eine weitere vorteilhafte Ausgestaltung der Überwachungsvorrichtung zeichnet sich dadurch aus, dass die Steuereinheit mit dem mindestens einen Reed-Kontakt signalleitend verbunden ist, und die Messeinheit oder die Steuereinheit ferner ausgebildet und eingerichtet ist, die Erstbefüllungszeit t_{S0} und die Befüllungszykluszeiten t_{Z} bei Änderung des Schaltzustandes des mindestens einen Reed-Kontaktes durch das Magnetelement des Schwimmers, oder durch den Schwimmer aus einem magnetischen Material, bei Erreichung der wenigsten einen Füllhöhe zu erfassen.

Bevorzugt ist die Überwachungsvorrichtung ausgebildet, nach dem Start des Pumpentestlaufes, und bevorzugt vor dem Start des Antriebes für die Sprinklerpumpe, zu prüfen, ob innerhalb einer vorgegebenen Warnzeit ein Ruhezustandssignal vorliegt und bei Überschreitung der vorgegebenen Warnzeit ohne Erfassung des Ruhezustandssignals ein Warnsignal zu erzeugen, wobei das Ruhezustandssignal einen betriebsbereiten Zustand der Messeinheit repräsentiert. Dies hat den Vorteil, dass wenn Elemente der Messeinheit defekt sind oder nicht in einem funktionsbereiten Zustand sind, diese Fehler behoben werden können, bevor der Start der Sprinklerpumpe ohne funktionsfähige Überwachungsvorrichtung erfolgt.

In einer bevorzugten Ausführung der Erfindung umfasst die Positionsbestimmungseinrichtung nur einen Reed-Kontakt, der am Auffangbehälter derart angeordnet ist, dass bei entleertem Behälter der Reed-Kontakt geschlossen ist. Beim Erreichen der wenigsten einen Füllhöhe wird der Reed-Kontakt geöffnet. Die Überwachungsvorrichtung ist vorzugsweise ausgebildet, dass der geöffnete Reed-Kontakt von der Steuereinheit oder der Messeinheit als Schaltsignal, das im Folgenden auch als Befüllungsschaltsignal bezeichnet wird, erfasst wird und die Befüllungszykluszeit t_{Z} aus der Zeitdifferenz zwischen zwei aufeinanderfolgenden Befüllungsschaltsignalen bestimmt wird. Vorzugsweise ist die Überwachungsvorrichtung ferner ausgebildet und eingerichtet, dass der geschlossene Reed-Kontakt bei entleertem Auffangbehälter als Ruhezustandssignal erfasst wird.

Die Überwachungsvorrichtung ist vorzugsweise eingerichtet, bei fehlendem Ruhezustandssignal innerhalb einer vorgegebenen Warnzeit, dies als Störung zu erfassen und ein Stoppsignal zur Abschaltung der Sprinklerpumpe zu erzeugen. Insbesondere ist die Überwachungsvorrichtung ausgebildet, vor der Erstbefüllung des Auffangbehälters nach Start des Pumpentestlaufs das Absperrorgan für die Ablasszeit t_{A} zu öffnen. Der betriebsbereite Zustand liegt vor, wenn das Absperrorgan wieder geschlossen ist und ein neuer Befüllungszyklus starten kann. Dies ermöglicht definierte Anfangsbedingungen zur Erfassung des Leckagefluids zu schaffen.

Vorzugsweise wird ein fehlendes Ruhezustandssignal innerhalb der vorgegebenen Warnzeit als Störung erfasst, wenn das Absperrorgan oder der Reed-Kontakt defekt sind, oder der Schwimmer sich im Auffangbehälter verklemmt hat. Dies ist eine kosteneffektive und zuverlässige Überwachung der Funktionsfähigkeit der Überwachungsvorrichtung.

In den vorteilhaften Ausgestaltungen der Erfindungen ist der Schwimmer mit einem allseitig umschlossenen Innenraum ausgebildet, in dem das mindestens eine Magnetelement angeordnet ist. Dies verhindert, dass das mindestens eine Magnetelement nicht mit dem Leckagefluid in Berührung kommt. Somit wird eine andernfalls mögliche Korrosion des mindestens einen Magnetelements verhindert. Vorteilhafterweise ist der Innenraum derart ausgebildet, dass der Schwimmer insgesamt eine geringere Dichte als das Leckagefluid aufweist. Das Material des Schwimmers ist stets so gewählt, dass die Gewichtskraft geringer als die Auftriebskraft ist.

Gemäß einer weiteren bevorzugten Ausgestaltung der Erfindung ist der Schwimmer vollkörperförmig oder hohlkörperförmig ausgebildet und weist eine Zylinder-, Kugel-, Halbkugel-, Würfel- oder Quaderform auf. Die Hohlkörperform des Schwimmers weist beispielsweise den Vorteil auf, dass der Schwimmer den gegenüber dem Leckagefluid abgedichteten Innenraum aufweist. Vorzugsweise ist die Form des Schwimmers korrespondierend zur Querschnittsgeometire des Auffangbehälters ausgebildet.

Ferner ist der Schwimmer vorzugsweise mindestens zweiteilig ausgebildet und umfasst ein Deckelelement und ein Bodenelement, wobei das Deckelelement und das Bodenelement derart ausgebildet sind, dass sie im zusammengefügten Zustand den Innenraum bilden. Für die Schwimmervariante mit dem mindestens einen Magnetelement hat dies den Vorteil, dass das Einsetzen des mindestens einen Magnetelements mit wenig Aufwand vor dem Zusammenfügen des Deckelelements und des Bodenelements erfolgen kann.

Vorzugsweise sind das Deckelelement und das Bodenelement zusammensteckbar, bevorzugt formschlüssig und/oder kraftschlüssig und/oder stoffschlüssig und bilden zusammengesteckt den Innenraum und/oder den Hohlraum.

In einer besonders bevorzugten Ausführungsvariante ist der Innenraum von einer Ausnehmung gebildet, die sich zumindest teilweise in dem Deckelelement und/oder in dem Bodenelement erstreckt. Vorteilhafterweise weist der Schwimmer aufgrund der einen Hohlraum schaffenden Ausnehmung eine reduzierte Gesamtdichte auf, so dass dessen Auftrieb begünstigt wird. Insbesondere ist der Hohlraum mit Luft gefüllt einrichtet.

In einer weiteren bevorzugten Ausführungsvariante weist das Deckelelement an der dem Bodenelement abgewandten Seite eine fluidableitende Oberflächentopologie auf. So kann beispielweise zumindest ein Teil der Oberfläche des Deckelelements kegelförmig oder pyramidenförmig ausgebildet sein, mit der Spitze ausgerichtet in Richtung der Auftriebskraft. Ferner kann zumindest ein Teil der Oberfläche des Deckelelements insbesondere paraboloid, konvex oder halbkugelförmig ausgebildet sein. Dies ermöglicht eine bessere Verteilung des aufgefangenen Leckagefluids im Auffangbehälter und ein verzögerungsfreies Vorbeifließen an den Außenwandungen des Schwimmers. Vorteilhafterweise wird durch diese erhabene Materialoberfläche des Deckelelements vermieden, dass sich geringe Menge des Leckagefluids an der Oberfläche ablagern und/oder ansammeln. Des Weiteren soll dadurch die Kontaktzeit zwischen Leckagefluid und Oberfläche reduziert werden. Optional kann die Oberfläche mit einem hydrophoben Material beschichtet sein, beispielsweise mit einer "Lotus-Effekt"-Beschichtung. Zur Verringerung der Adhäsionskräfte ist vorteilhafterweise die Kontaktfläche möglichst minimiert. In anderen Worten soll das Leckagefluid die Oberfläche minimal benetzen.

Der Schwimmer weist bevorzugt eine Oberseite und eine Unterseite auf. Die Oberseite ist die dem Bodenelement abgewandte Seite des Deckelelements in Richtung der Auftriebskraft. Die Unterseite ist die dem Deckelelement abgewandte Seite des Bodenelements entgegengesetzt der Richtung der Auftriebskraft.

Die fluidableitende Oberflächentopologie des Deckelelements ist bevorzugt an der Oberseite des Schwimmers angeordnet.

Eine weitere vorteilhafte Ausgestaltung der Erfindung ist dadurch gekennzeichnet, dass das Bodenelement an der dem Deckelelement abgewandten Seite mindestens ein Distanzelement aufweist, welches den Durchfluss des Leckagefluids zwischen einem Auflageelement des Auffangbehälters und dem Bodenelement gewährleistet. Das Auflageelement ist das Element, auf dem der Schwimmer mit einer Auflagefläche der unteren Außenseite des Bodenelements aufliegt, wenn das gesammelte Leckagefluid abgelassen wurde. Die Auflagefläche ist bevorzugt an der Unterseite des Schwimmers angeordnet. Besonders bevorzugt bilden mehrerer Distanzelemente einseitig offene Kanäle, die sich über den gesamten Querschnitt des Bodenelements des Schwimmers erstrecken.

Bevorzugt ist das mindestens eine Distanzelement an der Unterseite des Schwimmers angeordnet. Weiter bevorzugt sind mehrere der Distanzelemente an der Unterseite angeordnet.

Gemäß einer weiteren bevorzugten Ausgestaltung der Erfindung weist der Schwimmer eine Durchgangsausnehmung auf, die sich von dem Deckelelement zu dem Bodenelement erstreckt. Dies ermöglicht eine schnellere, ungehinderte Verteilung des aufgefangenen Leckagefluids im Auffangbehälter, da das Leckagefluid auch durch die Durchgangsausnehmung fließen kann.

Eine weitere zweckmäßige Ausgestaltung der Überwachungsvorrichtung ist dadurch gekennzeichnet, dass die Querschnittsgeometrie des Auffangbehälters derart zumindest im Wesentlichen ähnlich zur Querschnittsgeometrie der Außenwandungen des Schwimmers ausgebildet ist, sodass die Außenwandungen des Schwimmers allseitig von den Innenwandungen bzw. der Innenwand des Auffangbehälters unter Einhaltung eines Minimalabstandes voneinander beabstandet sind. Vorteilhafterweise ist so das Volumen im Zwischenraum zwischen dem Schwimmer und der Innenwand des Auffangbehälters möglichst gering ausgebildet, so dass der Schwimmer bereits bei sehr geringen Leckagemengen zuverlässig auftreibt.

So ist beispielsweise der Auffangbehälter als Rohr, beispielsweise aus transparentem Material, vorzugsweise aus PVC, ausgebildet. Vorzugsweise ist der Innendurchmesser des Rohres 1 bis 4 mm größer, besonders bevorzugt 2 mm größer als der Außendurchmesser des - beispielsweise zylinderförmig ausgebildeten - Schwimmers. Die Ausbildung des Schwimmers als Hohlzylinder, oder als Schwimmer mit der Durchgangsausnehmung, ermöglicht, dass das Leckagefluid so ungehindert wie möglich den Auffangbehälter füllt und der Einfluss von Oberflächenspannungseffekten verringert wird. Dies gewährleistet eine zuverlässige und reproduzierbare Zeitmessung der Erstbefüllungszeit t_{S0} und der Befüllungszykluszeit t_{z}.

Vorzugsweise ist im Deckelelement eine erste nutartige Aussparung, die vorzugsweise in Richtung des Außenmantels des hohlzylinderförmigen Bodenelements als offene Nut ausgebildet ist, und eine zweite nutartige Aussparung im Bodenelement, die vorzugsweise in Richtung der Durchgangsausnehmung in dem hohlzylinderförmigen Bodenelement als offene Nut ausgebildet ist, angeordnet. Bevorzugt bilden die erste nutartige Aussparung und die zweite nutartige Aussparung im zusammengesteckten Zustand von Deckelelement und Bodenelement den Innenraum.

Des Weiteren wird die Aufgabe durch ein Verfahren zur Überwachung eines Pumpentestlaufes einer Sprinklerpumpe mit den eingangs genannten Merkmalen mit folgenden Verfahrensschritten gelöst:
- Erfassung des während des Pumpentestlaufes aus dem Pumpengehäuse über die Stopfbuchsdichtung in den Trockenraum durchtretenden Leckagefluids mit einer Messeinheit einer Überwachungsvorrichtung;
- Erzeugung eines Alarmsignals und/oder eines Stoppsignals zur Abschaltung der Sprinklerpumpe bei Unterschreitung eines vorgegebenen Mindestdurchtritts.

Die mit dem erfindungsgemäßen Verfahren erzielten Vorteile entsprechen den bereits zuvor mit der erfindungsgemäßen Überwachungsvorrichtung genannten Vorzügen. Vorliegend und im Folgenden wird daher zur Vermeidung von Wiederholungen nur auf ausgewählte Aspekte des erfindungsgemäßen Verfahrens näher eingegangen, im Übrigen gelten die zuvor gemachten und im Zusammenhang mit der erfindungsgemäßen Überwachungsvorrichtung genannten Vorteile und Ausführungen in analoger Weise auch für das erfindungsgemäße Verfahren.

In einer bevorzugten Ausführung des Verfahrens, erfolgt die Durchführung des Verfahrens mit der erfindungsgemäßen Überwachungsvorrichtung.

Eine bevorzugte Weiterbildung des Verfahrens zeichnet sich dadurch aus, dass die Überwachungsvorrichtung ferner eine Steuereinheit aufweist, wobei die Steuereinheit mit der Messeinheit und dem Antrieb signalleitend verbunden ist, wobei die Erzeugung des Alarmsignals und/oder des Stoppsignals zur Abschaltung der Sprinklerpumpe mittels der Steuereinheit oder der Messeinheit erfolgt.

In einer weiteren bevorzugten Ausführung des Verfahrens, prüft die Überwachungsvorrichtung nach dem Start des Pumpentestlaufes, und bevorzugt vor dem Start des Antriebes für die Sprinklerpumpe, ob innerhalb einer vorgegebenen Warnzeit ein Ruhezustandssignal vorliegt und erzeugt bei Überschreitung der vorgegebenen Warnzeit ohne Erfassung des Ruhezustandssignals ein Warnsignal, wobei das Ruhezustandssignal einen betriebsbereiten Zustand der Messeinheit repräsentiert.

Dies hat den Vorteil, dass wenn eine oder mehrere Komponenten der Messeinheit defekt sind oder nicht in einem funktionsbereiten Zustand sind, diese Fehler behoben werden können, bevor der Start der Sprinklerpumpe ohne funktionsfähige Überwachungsvorrichtung erfolgt.

Eine weitere zweckmäßige Ausgestaltung der Erfindung ist gekennzeichnet durch den weiteren Verfahrensschritt:
- Erfassung des Leckagefluids in einem Auffangbehälter basierend auf wenigstens einer Füllhöhe des Leckagefluid in dem Auffangbehälter mittels der Messeinheit.

Eine bevorzugte Weiterbildung des Verfahrens zeichnet sich dadurch aus, dass die Erzeugung des Alarmsignals und/oder des Stoppsignals zur Abschaltung der Sprinklerpumpe mittels der Steuereinheit oder der Messeinheit, wenn bei einer Erstbefüllung des Auffangbehälters die wenigstens eine Füllhöhe des Leckagefluids im Auffangbehälter nicht in einer vordefinierten Erstbefüllungszeit t₀ erreicht wird, erfolgt.

Eine bevorzugte Weiterbildung des Verfahrens ist gekennzeichnet durch die weiteren Verfahrensschritte bei der Erstbefüllung des Auffangbehälters:
- Prüfen mittels der Messeinheit oder der Steuereinheit, ob eine Erstbefüllungszeit t_{S0} bis zum Erreichen der wenigsten einen Füllhöhe eine erste Ungleichung t_{S0} < t₀ erfüllt, und
- Erfassen von Befüllungszeiten tₛ bis zum Erreichen der wenigsten einen Füllhöhe in weiteren Befüllungszyklen bei Erfüllung der ersten Ungleichung mittels der Messeinheit oder der Steuereinheit.

Nach dem Start des Pumpentestlaufes beginnt durch den Druckaufbau im Pumpengehäuse der Durchtritt von Leckagefluid durch die Stopfbuchsdichtung. Das durch die Stopfbuchsdichtung tretende Wasser gelangt als Leckagefluid vom Nassraum des Pumpengehäuses in den Trockenraum des Lagergehäuses. Dort benötigt es eine von der Oberflächenbeschaffenheit und Oberflächentopologie im Inneren des Lagergehäuses abhängige Sammelzeit, um über eine Leckagefluidaustrittsöffnung in den Auffangbehälter zu gelangen. Somit berücksichtigt diese vordefinierte Erstbefüllungszeit t₀ eine Totzeit nach dem Pumpenteststart zur Erfassung der Unterschreitung des vorgegebenen Mindestdurchtritts. Vorzugsweise wird diese vordefinierte Erstbefüllungszeit t₀ bei der Inbetriebnahme der Sprinklerpumpe ermittelt oder ist unabhängig von der Inbetriebnahme in Versuchsreihen, vorzugsweise für den entsprechenden Pumpentyp, ermittelt worden.

Wenn durch die Messeinheit oder die Steuereinheit geprüft wurde, dass die erste Ungleichung t_{S0} < t₀ erfüllt ist und somit der vorgegebene Mindestdurchtritt nicht unterschritten wird, kann der Pumpentestlauf weiter laufen. Vorzugsweise werden während des Pumpentestlaufes zur Feststellung der Unterschreitung des vorgegebenen Mindestdurchtritts des Leckagefluids die Befüllungszeiten tₛ bis zum Erreichen der wenigsten einen Füllhöhe in weiteren Befüllungszyklen erfasst.

Eine weitere zweckmäßige Ausgestaltung des Verfahrens ist gekennzeichnet durch die weiteren Verfahrensschritte, ausgeführt durch die Messeinheit oder die Steuereinheit:
- Öffnen eines am Auffangbehälter angeordneten Absperrorgans zum Ablassen des gesammelten Leckagefluids beim Erreichen der wenigsten einen Füllhöhe;
- Schließen des Absperrorgans;
- Erfassen einer Befüllungszykluszeit t_{Z} zwischen zwei aufeinanderfolgenden Befüllungen des Auffangbehälters bis zum Wiedererreichen der wenigsten einen Füllhöhe;
- Erzeugen des Alarmsignals und/oder des Stoppsignals zur Abschaltung der Sprinklerpumpe, wenn t_{z} eine zweite Ungleichung t_{z} > t₁ erfüllt, wobei t₁ eine vordefinierte Befüllungszykluszeit ist.

Gemäß einer weiteren zweckmäßigen Ausgestaltung des Verfahrens erfüllt die Befüllungszykluszeit t_{Z} die Gleichung t_{Z} = t_{S} + t_{A} , wobei t_{A} eine vordefinierte Ablasszeit zwischen Öffnung und Schließung des Absperrorgans zum Ablassen des gesammelten Leckagefluids ist.

In einer bevorzugten Ausbildung des Verfahrens umfasst dieses ferner die weiteren Verfahrensschritte:
- Erfassung des Leckagefluids mit einem in dem Auffangbehälter beweglich angeordneten Schwimmer;
- Erfassung der wenigsten einen Füllhöhe anhand der Position des Schwimmers mittels der Messeinheit;
- Bestimmung wenigstens einer Position des Schwimmers mittels einer Positionsbestimmungseinrichtung.

Ein weiterer Verfahrensschritt in einer bevorzugten Ausgestaltung des Verfahrens ist die Erfassung der Erstbefüllungszeit t_{S0} und der Befüllungszykluszeit t_{Z} bei Änderung eines Schaltzustandes eines mindestens einen Reed-Kontaktes, wobei die Positionsbestimmungseinrichtung durch den mindestens einen am Auffangbehälter angeordneten Reed-Kontakt und mindestens ein mit dem Schwimmer verbundenes Magnetelement oder durch den mindestens einen am Auffangbehälter angeordneten Reed-Kontakt und einen Schwimmer aus einem magnetischen Material gebildet ist.

Bevorzugt wird in dem erfindungsgemäßen Verfahren ein Schwimmer nach den vorgenannten Ansprüchen oder den beschriebenen Ausführungsvarianten des Schwimmers verwendet.

In einem bevorzugten Verfahrensschritt erfolgt die Erfassung der Erstbefüllungszeit t_{S0}, der Befüllungszeit t_{S} oder der Befüllungszykluszeit t_{Z} mittels der Positionsbestimmungseinrichtung.

Die Aufgabe wird ferner auch durch die eingangs genannte Wasserlöschanlage, die die zuvor beschriebene erfindungsgemäße Überwachungsvorrichtung aufweist, gelöst.

Die Erfindung betrifft auch eine Überwachungsvorrichtung und ein Verfahren zur Überwachung einer Pumpe.

Pumpen mit Stopfbuchsdichtungen zur Förderung von Fluiden müssen auch in anderen Anwendungsbereichen überwacht werden.

Das Pumpengehäuse der Pumpe umfasst regelmäßig einen Nassraum, in welchem das rotierende Laufrad, das zu fördernde Fluid von der Saugseite zur Druckseite der Pumpe bewegt. Die Rotation des Laufrades wird über den Antrieb, welcher mit der Antriebswelle der Pumpe mechanisch gekoppelt ist, erzeugt. Der Antrieb ist beispielsweise ein Dieselmotor oder ein Elektromotor.

Die Antriebswelle der Pumpe erstreckt sich insbesondere vom Laufrad im Nassraum des Pumpengehäuses, über einen Trockenraum, der beispielsweise von einem Lagergehäuse umgeben sein kann, und vorzugsweise Lager zur Führung der Antriebswelle umfasst, bis zum Antrieb. Dieses Lagergehäuse ist insbesondere mit dem Pumpengehäuse verbunden.

Die Antriebswelle muss gegen das Pumpengehäuse abgedichtet werden. Eine Stopfbuchsdichtung ist eine wirtschaftliche Dichtungslösung. Beispielsweise wird als Dichtungsmaterial eine Packungsschnur verwendet, beispielsweise eine PTFE-Schnur, eine Filzschnur, eine getränkte Baumwollschnur oder eine Graphitschnur, wobei die Packungsschnur um die Welle gewickelt und in eine Kammer eingepresst ist. Zeigt sich, dass die Leckrate - beispielsweise durch Verschleiß oder andere Einflussfaktoren - anwächst, so wird die Betätigung eines Einstellelements erforderlich, vorzugsweise eines Pressstempels oder eines Pressflansches, um die Dichtwirkung der Stopfbuchse nachzustellen. Ist das nicht mehr möglich, dann wird eine neue Packungsschnur eingelegt. Die Stopfbuchsdichtung ist ein Dichtelement, bei dem immer eine gewisse Undichtigkeit herrscht.

Somit ist die Stopfbuchsdichtung für den Durchtritt von Leckagefluid vom Pumpengehäuse in einen Trockenraum ausgebildet. Das Leckagefluid kühlt einerseits das Dichtungsmaterial und dient anderseits als Schmier- und/oder Gleitmittel. Bei diesem Durchtritt von Leckagefluid handelt es sich im Idealfall um geringe Mengen von Leckagefluid. Insbesondere wird bei der Inbetriebnahme der Pumpe der Durchtritt von Leckagefluid mit dem Einstellelement so eingestellt, dass stets eine gewisse Menge an Leckagefluid durchtritt.

Wenn nachfolgend von Leckagefluid die Rede ist, so kann damit stets jegliches Fluid gemeint sein.

Im Stand der Technik sind Lösungen bekannt, welche vermehrte Leckagen automatisch melden oder ein Überschreiten einer vorgegebenen maximalen Leckagefluidmenge melden.

So offenbart die DE 2 617 658 A1 eine Stopfbuchsdichtung mit an dieser angeschlossenem Kontroll- bzw. Steuersystem, das Einrichtungen aufweist, welche Undichtheiten der um eine polierte Kolbenstange angeordneten Dichtungen ermitteln bzw. feststellen und die durch Einstellen bzw. durch Verstellen dieser Dichtungen die Undichtheiten korrigieren bzw. beheben. Hierfür ist ein druckbetätigtes Kolbensystem zum Andruck dieser Dichtungen an der polierten Stange vorgesehen. Ferner sind weitere Einrichtungen vorgesehen, die dem Bedienungspersonal die Undichtheit melden.

Es ist daher ferner Aufgabe der vorliegenden Erfindung, eine Überwachungsvorrichtung für eine Pumpe vorzuschlagen, die eine präzise und zuverlässige Erfassung des Leckagefluids, insbesondere von geringen Mengen, erlaubt. Weiter ist es Aufgabe der Erfindung, mögliche Beschädigungen und/oder Zerstörungen der Stopfbuchsdichtung durch Mangelschmierung und/oder Mangelkühlung möglichst frühzeitig zu erkennen und wirksam zu verhindern. Des Weiteren ist es Aufgabe, das Leckagefluid automatisiert und möglichst kostengünstig zu erfassen. Auch ist es Aufgabe der vorliegenden Erfindung, ein entsprechendes Verfahren zur Überwachung bereitzustellen.

Diese Aufgabe wird durch eine Überwachungsvorrichtung für eine Pumpe mit den für den dritten Aspekt der Erfindung eingangs genannten Merkmalen dadurch gelöst, dass die Überwachungsvorrichtung eine zum Erfassen des während des Pumpenlaufes aus dem Pumpengehäuse über die Stopfbuchsdichtung in den Trockenraum durchtretenden Leckagefluids eingerichtete Messeinheit umfasst und ausgebildet ist, im Fall einer Unterschreitung eines vorgegebenen Mindestdurchtritts ein Stoppsignal zur Abschaltung der Pumpe und/oder ein Alarmsignal zu erzeugen.

Dies ist die erfindungsgemäße Überwachungsvorrichtung des dritten Aspekts der Erfindung mit den nachfolgenden Ausführungsvarianten.

Auf diese Weise wird erstmalig sichergestellt, dass das Unterschreiten des vorgegebenen Mindestdurchtritts automatisiert und zuverlässig festgestellt wird. Somit werden andernfalls mögliche Schäden an der Stopfbuchsdichtung stets vermieden und Maßnahmen zur Korrektur ermöglicht. Hiermit wird sichergestellt, dass bei jedem Pumpenlauf der vorgegebene Mindestdurchtritt von Leckagefluid gewährleistet ist und Verschleiß und Schäden der Stopfbuchdichtung aufgrund von Mangelschmierung und/oder Mangelkühlung stets vermieden werden.

Die Aufrechterhaltung des vorgegebenen Mindestdurchtritts schützt die Stopfbuchsdichtung vor erhöhten Reibungskräften und dadurch induzierte Hitzeeinwirkung auf die Stopfbuchse. Vorteilhafterweise wird so die Standzeit bzw. Lebensdauer der Stopfbuchsdichtung verlängert. So werden Dichteigenschaften der Stopfbuchsdichtung möglichst lange gewährleistet. Bei einem unerwünschten Funktionsverlust der Stopfbuchsdichtung treten regelmäßig große Mengen Leckagefluid aus, was einen so starken Druckabfall zur Folge hätte, dass die ausreichende Bereitstellung des zu fördernden Fluids nicht mehr gewährleistet wäre.

Weiter bevorzugt ist die Messeinheit ausgebildet und eingerichtet, den Mindestdurchtritt quantitativ oder qualitativ zu erfassen. Unter quantitativer Erfassung fällt beispielsweise eine volumetrische Bestimmung des Mindestdurchtritts. Die qualitative Erfassung ist beispielsweise eingerichtet, den Mindestdurchtritt optisch, beispielsweise mittels optischer Sensoren oder Kamera, zu erfassen. Die optische Erfassung umfasst bevorzugt eine Tropfenerfassung, einen Vergleich mit einem vorgegebenen Schwellwert oder einer Fluidstrahlerfassung. Die Messeinheit ist vorzugsweise ausgebildet, sehr geringe Leckagen zu erfassen.

Optional können Werte für die Menge des Leckagefluids festgesetzt werden. Setzt man beispielweise einen Wert von 0,05 ml für einen Tropfen Leckagefluid an, so ergibt sich für einen vorgegebenen Mindestdurchtritt von Leckagefluid von einem Tropfen pro Sekunde ein Volumenstromwert von 0,05 ml/s.

Eine zweckmäßige Ausgestaltung der Überwachungsvorrichtung ist dadurch gekennzeichnet, dass die Überwachungsvorrichtung ferner eine Steuereinheit aufweist, wobei die Steuereinheit mit der Messeinheit und dem Antrieb signalleitend verbunden ist, wobei die Steuereinheit oder die Messeinheit ausgebildet und eingerichtet ist, das Alarmsignal und/oder das Stoppsignal zur Abschaltung der Pumpe zu erzeugen.

Vorzugsweise startet die Steuereinheit den Pumpenlauf und erzeugt das Alarmsignal und/oder das Stoppsignal zur Abschaltung der Pumpe. Insbesondere steuert die Steuereinheit die Messeinheit und erfasst Daten und Signale der Messeinheit und verarbeitet diese.

In einer bevorzugten Ausgestaltungsvariante wird die Messeinheit beispielsweise ausgewählt aus der Liste: Bildverarbeitungssysteme, Füllstandsmesssysteme, Wägezellen, mechanische Füllstandsmesser wie Schwimmer, Leitfähigkeitsmessungssysteme, kapazitive Messsysteme, optische Messsysteme oder Ultraschallsysteme.

Somit kommen unterschiedliche Messgrößen zur Bestimmung des Durchtritts von Leckagefluid und zur Prüfung, ob der Mindestdurchtritt unterschritten wird, zur Anwendung. Unter Erfassung des Durchtritts von Leckagefluid im Sinne der vorliegenden Erfindung und der Prüfung, ob der erfasste Durchtritt den vorgegebenen Mindestdurchtritt unterschreitet, ist vorzugweise zu verstehen, dass der erfassten Messgröße zur Bestimmung des Durchtritts von Leckagefluid ein entsprechender Zahlenwert zugeordnet oder zuordenbar ist. Auch ist es möglich, dass der Mindestdurchtritt in nicht quantifizierter Form, also rein qualitativ, erfasst wird.

Es können stellvertretende Messgrößen erfasst werden, beispielsweise die Zeiten bis zum Erreichen einer Füllhöhe, beispielsweise bei der Verwendung von Füllstandsmesssystemen.

Der erfasste Zahlenwert der Messgröße muss daher nicht notwendigerweise mit den tatsächlichen Volumenstromwerten des Leckagefluids übereinstimmen, sondern kann durch eine vorgegebene Zuordnungsvorschrift umgerechnet werden. Vorteilhafterweise korreliert der Zahlenwert mit einem Volumenstromwert. Vorzugweise wird dementsprechend auch für den vorgegebenen Mindestdurchtritt ein Zahlenwert vorgegeben.

In einer bevorzugten Ausgestaltung der Erfindung erfolgt die Erzeugung des Stoppsignals zur Abschaltung der Pumpe und/oder des Alarmsignals, wenn der vorgegebene Mindestdurchtritt im Bereich eines Volumenstroms beispielsweise von 0,01 ml pro Sekunde bis 0,5 ml pro Sekunde, besonders bevorzugt im Bereich von 0,05 ml pro Sekunde bis 0,3 ml pro Sekunde liegt. Bei einem angenommenen oder geschätzten Volumen eines Fluidtropfens von 0,05 ml liegt der bevorzugte Bereich für den vorgegebenen Mindestdurchtritt bei einem bis zehn Tropfen pro Sekunde, besonders bevorzugt im Bereich von einem bis sechs Tropfen pro Sekunde.

Eine weitere zweckmäßige Ausgestaltung der Überwachungsvorrichtung ist dadurch gekennzeichnet, dass die Messeinheit einen zur Erfassung des Leckagefluids eingerichteten Auffangbehälter umfasst und die Messeinheit ausgebildet ist, basierend auf wenigstens einer Füllhöhe das Leckagefluid in dem Auffangbehälter zu erfassen. Die wenigstens eine Füllhöhe dient vorzugsweise als Richtwert bzw. Maß zur Ermittlung der Menge des ausgetretenen Leckagefluids. Mit anderen Worten korrespondiert die Füllhöhe mit dem Durchtritt des Leckagefluids. Vorzugsweise bestimmt die Messeinheit dahingehend indirekt oder direkt, ob der in den Auffangbehälter gelangte Durchtritt dem vorgegebenen Mindestdurchtritt entspricht oder diesen sogar unterschreitet. Der erfindungsgemäße Auffangbehälter ist vorzugsweise als Sammelbehälter ausgebildet. Dies bietet den Vorteil, dass auch kleinste Durchtritte an Leckagefluid erfassbar sind, da der Auffangbehälter eine Sammelfunktion ausübt.

In einer bevorzugten Ausführung der Erfindung wird der Auffangbehälter unter einer Leckagefluidaustrittsöffnung des Lagergehäuses angeordnet. Somit gelangt das Leckagefluid vom Nassraum des Pumpengehäuses in den Trockenraum des Lagergehäuses und vorzugsweise über die Leckagefluidaustrittsöffnung in den Auffangbehälter.

Gemäß einer alternativen Ausbildung des Auffangbehälters ist dieser Teil eines zweiarmigen Hebels, der um eine Schwenkachse schwenkbar gelagert ist. Überschreitet das in den Auffangbehälter gelangte Leckagefluid eine vorgegebene Menge, so wird selbsttätig ein Kippmoment erzeugt, so dass sich der Auffangbehälter eigenständig entleert und das Verschwenken des Auffangbehälters zur Erfassung des Durchtritts herangezogen wird.

Eine weitere zweckmäßige Ausbildung der Überwachungsvorrichtung ist dadurch gekennzeichnet, dass die Messeinheit oder die Steuereinheit eingerichtet ist, bei einer Erstbefüllung des Auffangbehälters das Alarmsignal und/oder das Stoppsignal zur Abschaltung der Pumpe zu erzeugen, wenn die wenigstens eine Füllhöhe des Leckagefluids im Auffangbehälter nicht in einer vordefinierten Erstbefüllungszeit t₀ erreicht wird.

Nach dem Start des Pumpenlaufes beginnt durch den Druckaufbau im Pumpengehäuse der Durchtritt von Leckagefluid durch die Stopfbuchsdichtung. Das durch die Stopfbuchsdichtung tretende Fluid gelangt als Leckagefluid vom Nassraum des Pumpengehäuses in den Trockenraum des Lagergehäuses. Dort benötigt es eine von der Oberflächenbeschaffenheit und Oberflächentopologie im Inneren des Lagergehäuses abhängige Sammelzeit, um über die Leckagefluidaustrittsöffnung in den Auffangbehälter zu gelangen. Somit berücksichtigt diese vordefinierte Erstbefüllungszeit t₀ eine Totzeit nach dem Pumpenstart zur Erfassung der Unterschreitung des vorgegebenen Mindestdurchtritts. Vorzugsweise wird diese vordefinierten Erstbefüllungszeit t₀ bei der Inbetriebnahme der Pumpe ermittelt, oder sie ist beispielsweise unabhängig von der Inbetriebnahme in Versuchsreihen für den entsprechenden Pumpentyp ermittelt worden.

Dies bietet den Vorteil, dass ein zu geringer Leckagefluiddurchtritt frühzeitig nach Ermittlung gemeldet wird. Eine Unterschreitung des vorgegebenen Mindestdurchtritts führt sogleich zur Erzeugung des Alarmsignals und/oder zur Abschaltung der Pumpe, so dass infolgedessen durch die rechtzeitige Abschaltung Verschleiß und Schäden an der Stopfbuchsdichtung aufgrund von Mangelschmierung und/oder Mangelkühlung in jedem Fall vermieden werden.

Eine bevorzugte Weiterbildung der Erfindung zeichnet sich dadurch aus, dass die Messeinheit oder die Steuereinheit ausgebildet und eingerichtet ist zu prüfen, ob bei der Erstbefüllung des Auffangbehälters eine Erstbefüllungszeit t_{S0} bis zum Erreichen der wenigsten einen Füllhöhe eine erste Ungleichung t_{S0} < t₀ erfüllt, und ferner ausgebildet und eingerichtet ist, bei Erfüllung der ersten Ungleichung, Befüllungszeiten tₛ bis zum Erreichen der wenigsten einen Füllhöhe in weiteren Befüllungszyklen, zu erfassen.

Wenn durch die Messeinheit oder die Steuereinheit geprüft wurde, dass die erste Ungleichung t_{S0} < t₀ erfüllt ist und somit der vorgegebene Mindestdurchtritt nicht unterschritten wird, kann der Pumpenlauf weiterlaufen.

Vorzugsweise werden während des Pumpenlaufes zur Feststellung der Unterschreitung des vorgegebenen Mindestdurchtritts des Leckagefluids die Befüllungszeiten tₛ bis zum Erreichen der wenigsten einen Füllhöhe in weiteren Befüllungszyklen erfasst.

Gemäß einer weiteren bevorzugten Ausgestaltung der Überwachungsvorrichtung ist an dem Auffangbehälter ein Absperrorgan angeordnet, und die Messeinheit oder die Steuereinheit ist ausgebildet und eingerichtet, beim Erreichen der wenigsten einen Füllhöhe das Absperrorgan zum Ablassen des gesammelten Leckagefluids zu öffnen und im Anschluss zu schließen, sowie eine Befüllungszykluszeit t_{Z} zwischen zwei aufeinanderfolgenden Befüllungen des Auffangbehälters bis zum Wiederreichen der wenigsten einen Füllhöhe zu erfassen, und das Alarmsignal und/oder das Stoppsignal zur Abschaltung der Pumpe zu erzeugen, wenn t_{z} eine zweite Ungleichung t_{z} > t₁ erfüllt, wobei t₁ eine vordefinierte Befüllungszykluszeit ist.

Auf diese Weise wird sichergestellt, dass das gesammelte Leckagefluid regelmäßig abgelassen wird und damit sowohl eine Überfüllung vermieden als auch eine Leerung des Auffangbehälters erfolgt, um ein erneutes Ansammeln von Leckagefluid zur wiederkehrenden Erfassung des Durchtritts zu ermöglichen. Dies bietet den Vorteil, dass quasi kontinuierlich bzw. repetierend geringe Mengen Leckagefluid erfasst werden und so die Detektion einer Unterschreitung des vorgegebenen Mindestdurchtritts stets gewährleistet ist. In anderen Worten gewährleistet das Absperrorgan, dass beispielsweise die wenigstens eine Füllhöhe wiederholt erreicht werden muss und diese nicht dauerhaft oder für eine längere Zeit überschritten ist.

Alternativ ist das Absperrorgan insbesondere totraumvolumenfrei ausgebildet. Optional ist das Absperrorgan im Boden des Aufnahmebehälters angeordnet und eingerichtet, eine Öffnung in diesem steuervariabel freizugeben. Dies begünstigt insbesondere die Erfassung eines geringen Leckagedurchtritts.

Das Absperrorgan ist optional als Ventil, besonders bevorzugt als Magnetventil, ausgebildet. Dies bietet den Vorteil, dass das Leckagefluid steuerbar im Auffangbehälter gehalten wird und bei Bedarf kontrolliert und präzise ablassbar eingerichtet ist.

Vorzugsweise erfüllt die Befüllungszykluszeit t_{Z} die Gleichung t_{Z} = t_{S} + t_{A}, wobei t_{A} eine vordefinierte Ablasszeit zwischen Öffnung und Schließung des Absperrorgans zum Ablassen des gesammelten Leckagefluids ist. Die Zeit t_{S} ist die Befüllungszeit tₛ bis zum Erreichen der wenigsten einen Füllhöhe. Die Werte für t₀ und/oder t₁ werden beispielsweise vor oder bei der Inbetriebnahme der Überwachungsvorrichtung in der Messeinheit oder der Steuereinheit gespeichert.

Eine weitere bevorzugte Ausbildung der Überwachungsvorrichtung ist dadurch gekennzeichnet, dass in dem Auffangbehälter ein zum Erfassen des Leckagefluids eingerichteter Schwimmer beweglich angeordnet ist und die Messeinheit ausgebildet ist, anhand der Position des Schwimmers die wenigstens eine Füllhöhe zu erfassen. Vorteilhafterweise ist die erfindungsgemäße Überwachungsvorrichtung konstruktiv möglichst einfach ausgeführt und aufgrund ihrer geringen mechanischen Komplexität äußerst zuverlässig und wartungsarm.

Vorzugsweise umfasst die Messeinheit eine zur Bestimmung wenigstens einer Position des Schwimmers eingerichtete Positionsbestimmungseinrichtung. Die Positionsbestimmungseinrichtung ist eingerichtet, das Erreichen der wenigsten einen Füllhöhe des Schwimmers im Auffangbehälter zu erfassen. Auf diese Weise ist es möglich, anhand der wenigsten einen Füllhöhe auf den Durchtritt repräsentierenden Füllstand zu schließen.

Eine bevorzugte Weiterbildung der Erfindung zeichnet sich dadurch aus, dass die Positionsbestimmungseinrichtung mindestens einen am Auffangbehälter angeordneten Reed-Kontakt und mindestens ein mit dem Schwimmer verbundenes Magnetelement oder den aus einem magnetischen Material gebildeten Schwimmer umfasst. Dies stellt eine kosteneffektive konstruktive Ausgestaltung dar. Zudem sind die Betriebskosten einer solchen Lösung äußerst gering.

Eine weitere vorteilhafte Ausgestaltung der Überwachungsvorrichtung zeichnet sich dadurch aus, dass die Steuereinheit mit dem mindestens einen Reed-Kontakt signalleitend verbunden ist, und die Messeinheit oder die Steuereinheit ferner ausgebildet und eingerichtet ist, die Erstbefüllungszeit t_{S0} und die Befüllungszykluszeiten t_{Z} bei Änderung des Schaltzustandes des mindestens einen Reed-Kontaktes durch das Magnetelement des Schwimmers, oder durch den Schwimmer aus einem magnetischen Material, bei Erreichung der wenigsten einen Füllhöhe zu erfassen.

Bevorzugt ist die Überwachungsvorrichtung ausgebildet, nach dem Start des Pumpenlaufes, und bevorzugt vor dem Start des Antriebes für die Pumpe, zu prüfen, ob innerhalb einer vorgegebenen Warnzeit ein Ruhezustandssignal vorliegt und bei Überschreitung der vorgegebenen Warnzeit ohne Erfassung des Ruhezustandssignals ein Warnsignal zu erzeugen, wobei das Ruhezustandssignal einen betriebsbereiten Zustand der Messeinheit repräsentiert. Dies hat den Vorteil, dass wenn Elemente der Messeinheit defekt sind oder nicht in einem funktionsbereiten Zustand sind, diese Fehler behoben werden können, unmittelbar nach dem Start der Pumpe oder bevor der Start der Pumpe ohne funktionsfähige Überwachungsvorrichtung erfolgt.

In einer bevorzugten Ausführung der Erfindung umfasst die Positionsbestimmungseinrichtung nur einen Reed-Kontakt, der am Auffangbehälter derart angeordnet ist, dass bei entleertem Behälter der Reed-Kontakt geschlossen ist. Beim Erreichen der wenigsten einen Füllhöhe wird der Reed-Kontakt geöffnet. Die Überwachungsvorrichtung ist vorzugsweise ausgebildet, dass der geöffnete Reed-Kontakt von der Steuereinheit oder der Messeinheit als Schaltsignal, das im Folgenden auch als Befüllungsschaltsignal bezeichnet wird, erfasst wird und die Befüllungszykluszeit t_{Z} aus der Zeitdifferenz zwischen zwei aufeinanderfolgenden Befüllungsschaltsignalen bestimmt wird. Vorzugsweise ist die Überwachungsvorrichtung ferner ausgebildet und eingerichtet, dass der geschlossene Reed-Kontakt bei entleertem Auffangbehälter als Ruhezustandssignal erfasst wird.

Die Überwachungsvorrichtung ist vorzugsweise eingerichtet, bei fehlendem Ruhezustandssignal innerhalb einer vorgegebenen Warnzeit dies als Störung zu erfassen und ein Stoppsignal zur Abschaltung der Pumpe zu erzeugen. Insbesondere ist die Überwachungsvorrichtung ausgebildet, vor der Erstbefüllung des Auffangbehälters nach Start des Pumpenlaufs das Absperrorgan für die Ablasszeit t_{A} zu öffnen. Der betriebsbereite Zustand liegt vor, wenn das Absperrorgan wieder geschlossen ist und ein neuer Befüllungszyklus starten kann. Dies ermöglicht definierte Anfangsbedingungen zur Erfassung des Leckagefluids zu schaffen.

Vorzugsweise wird ein fehlendes Ruhezustandssignal innerhalb der vorgegebenen Warnzeit als Störung erfasst, wenn das Absperrorgan oder der Reed-Kontakt defekt sind, oder der Schwimmer sich im Auffangbehälter verklemmt hat. Dies ist eine kosteneffektive und zuverlässige Überwachung der Funktionsfähigkeit der Überwachungsvorrichtung.

In den vorteilhaften Ausgestaltungen der Erfindungen ist der Schwimmer mit einem allseitig umschlossenen Innenraum ausgebildet, in dem das mindestens eine Magnetelement angeordnet ist. Dies verhindert, dass das mindestens eine Magnetelement nicht mit dem Leckagefluid in Berührung kommt. Somit wird eine andernfalls mögliche Korrosion des mindestens einen Magnetelements verhindert. Vorteilhafterweise ist der Innenraum derart ausgebildet, dass der Schwimmer insgesamt eine geringere Dichte als das Leckagefluid aufweist. Das Material des Schwimmers ist stets so gewählt, dass die Gewichtskraft geringer als die Auftriebskraft ist.

Gemäß einer weiteren bevorzugten Ausgestaltung der Erfindung ist der Schwimmer vollkörperförmig oder hohlkörperförmig ausgebildet und weist eine Zylinder-, Kugel-, Halbkugel-, Würfel- oder Quaderform auf. Die Hohlkörperform des Schwimmers weist beispielsweise den Vorteil auf, dass der Schwimmer den gegenüber dem Leckagefluid abgedichteten Innenraum aufweist. Vorzugsweise ist die Form des Schwimmers korrespondierend zur Querschnittsgeometire des Auffangbehälters ausgebildet.

Ferner ist der Schwimmer vorzugsweise mindestens zweiteilig ausgebildet und umfasst ein Deckelelement und ein Bodenelement, wobei das Deckelelement und das Bodenelement derart ausgebildet sind, dass sie im zusammengefügten Zustand den Innenraum bilden. Für die Schwimmervariante mit dem mindestens einen Magnetelement hat dies den Vorteil, dass das Einsetzen des mindestens einen Magnetelements mit wenig Aufwand vor dem Zusammenfügen des Deckelelements und des Bodenelements erfolgen kann.

Vorzugsweise sind das Deckelelement und das Bodenelement zusammensteckbar, bevorzugt formschlüssig und/oder kraftschlüssig und/oder stoffschlüssig und bilden zusammengesteckt den Innenraum und/oder den Hohlraum.

In einer besonders bevorzugten Ausführungsvariante ist der Innenraum von einer Ausnehmung gebildet, die sich zumindest teilweise in dem Deckelelement und/oder in dem Bodenelement erstreckt. Vorteilhafterweise weist der Schwimmer aufgrund der einen Hohlraum schaffenden Ausnehmung eine reduzierte Gesamtdichte auf, so dass dessen Auftrieb begünstigt wird. Insbesondere ist der Hohlraum mit Luft gefüllt einrichtet.

In einer weiteren bevorzugten Ausführungsvariante weist das Deckelelement an der dem Bodenelement abgewandten Seite eine fluidableitende Oberflächentopologie auf. So kann beispielweise zumindest ein Teil der Oberfläche des Deckelelements kegelförmig oder pyramidenförmig ausgebildet sein, mit der Spitze ausgerichtet in Richtung der Auftriebskraft. Ferner kann zumindest ein Teil der Oberfläche des Deckelelements insbesondere paraboloid, konvex oder halbkugelförmig ausgebildet sein. Dies ermöglicht eine bessere Verteilung des aufgefangenen Leckagefluids im Auffangbehälter und ein verzögerungsfreies Vorbeifließen an den Außenwandungen des Schwimmers. Vorteilhafterweise wird durch diese erhabene Materialoberfläche des Deckelelements vermieden, dass sich geringe Menge des Leckagefluids an der Oberfläche ablagern und/oder ansammeln. Des Weiteren soll dadurch die Kontaktzeit zwischen Leckagefluid und Oberfläche reduziert werden. Optional kann die Oberfläche mit einem hydrophoben Material beschichtet sein, beispielsweise mit einer "Lotus-Effekt"-Beschichtung. Zur Verringerung der Adhäsionskräfte ist vorteilhafterweise die Kontaktfläche möglichst minimiert. In anderen Worten soll das Leckagefluid die Oberfläche minimal benetzen.

Der Schwimmer weist bevorzugt eine Oberseite und eine Unterseite auf. Die Oberseite ist die dem Bodenelement abgewandte Seite des Deckelelements in Richtung der Auftriebskraft. Die Unterseite ist die dem Deckelelement abgewandte Seite des Bodenelements entgegengesetzt der Richtung der Auftriebskraft.

Die fluidableitende Oberflächentopologie des Deckelelements ist bevorzugt an der Oberseite des Schwimmers angeordnet.

Eine weitere vorteilhafte Ausgestaltung der Erfindung ist dadurch gekennzeichnet, dass das Bodenelement an der dem Deckelelement abgewandten Seite mindestens ein Distanzelement aufweist, welches den Durchfluss des Leckagefluids zwischen einem Auflageelement des Auffangbehälters und dem Bodenelement gewährleistet. Das Auflageelement ist das Element, auf dem der Schwimmer mit einer Auflagefläche der unteren Außenseite des Bodenelements aufliegt, wenn das gesammelte Leckagefluid abgelassen wurde. Die Auflagefläche ist bevorzugt an der Unterseite des Schwimmers angeordnet. Besonders bevorzugt bilden mehrerer Distanzelemente einseitig offene Kanäle, die sich über den gesamten Querschnitt des Bodenelements des Schwimmers erstrecken.

Bevorzugt ist das mindestens eine Distanzelement an der Unterseite des Schwimmers angeordnet. Weiter bevorzugt sind mehrere der Distanzelemente an der Unterseite angeordnet.

Gemäß einer weiteren bevorzugten Ausgestaltung der Erfindung weist der Schwimmer eine Durchgangsausnehmung auf, die sich von dem Deckelelement zu dem Bodenelement erstreckt. Dies ermöglicht eine schnellere, ungehinderte Verteilung des aufgefangenen Leckagefluids im Auffangbehälter, da das Leckagefluid auch durch die Durchgangsausnehmung fließen kann.

Eine weitere zweckmäßige Ausgestaltung der Überwachungsvorrichtung ist dadurch gekennzeichnet, dass die Querschnittsgeometrie des Auffangbehälters derart zumindest im Wesentlichen ähnlich zur Querschnittsgeometrie der Außenwandungen des Schwimmers ausgebildet ist, sodass die Außenwandungen des Schwimmers allseitig von den Innenwandungen bzw. der Innenwand des Auffangbehälters unter Einhaltung eines Minimalabstandes voneinander beabstandet sind. Vorteilhafterweise ist so das Volumen im Zwischenraum zwischen dem Schwimmer und der Innenwand des Auffangbehälters möglichst gering ausgebildet, so dass der Schwimmer bereits bei sehr geringen Leckagemengen zuverlässig auftreibt.

So ist beispielsweise der Auffangbehälter als Rohr, beispielsweise aus transparentem Material, vorzugsweise aus PVC, ausgebildet. Vorzugsweise ist der Innendurchmesser des Rohres 1 bis 4 mm größer, besonders bevorzugt 2 mm größer als der Außendurchmesser des - beispielsweise zylinderförmig ausgebildeten - Schwimmers. Die Ausbildung des Schwimmers als Hohlzylinder, oder als Schwimmer mit der Durchgangsausnehmung, ermöglicht, dass das Leckagefluid so ungehindert wie möglich den Auffangbehälter füllt und der Einfluss von Oberflächenspannungseffekten verringert wird. Dies gewährleistet eine zuverlässige und reproduzierbare Zeitmessung der Erstbefüllungszeit t_{S0} und der Befüllungszykluszeit t_{z}.

Vorzugsweise ist im Deckelelement eine erste nutartige Aussparung, die vorzugsweise in Richtung des Außenmantels des hohlzylinderförmigen Bodenelements als offene Nut ausgebildet ist, und eine zweite nutartige Aussparung im Bodenelement, die vorzugsweise in Richtung der Durchgangsausnehmung in dem hohlzylinderförmigen Bodenelement als offene Nut ausgebildet ist, angeordnet. Bevorzugt bilden die erste nutartige Aussparung und die zweite nutartige Aussparung im zusammengesteckten Zustand von Deckelelement und Bodenelement den Innenraum.

Des Weiteren wird die Aufgabe durch ein Verfahren zur Überwachung eines Pumpenlaufes einer Pumpe, wobei die Pumpe zumindest ein, einen Nassraum umgebendes Pumpengehäuse, eine mittels einer Stopfbuchsdichtung gegen das Pumpengehäuse gedichtet angeordnete Antriebswelle und einen mit der Antriebswelle mechanisch gekoppelten Antrieb umfasst, wobei die Stopfbuchsdichtung für den Durchtritt von Leckagefluid vom Pumpengehäuse in den Trockenraum ausgebildet und eingerichtet ist, mit folgenden Verfahrensschritten gelöst:
- Erfassung des während des Pumpenlaufes aus dem Pumpengehäuse über die Stopfbuchsdichtung in den Trockenraum durchtretenden Leckagefluids mit einer Messeinheit einer Überwachungsvorrichtung;
- Erzeugung eines Alarmsignals und/oder eines Stoppsignals zur Abschaltung der Pumpe bei Unterschreitung eines vorgegebenen Mindestdurchtritts.

Die mit dem erfindungsgemäßen Verfahren erzielten Vorteile entsprechen den bereits zuvor mit der erfindungsgemäßen Überwachungsvorrichtung des dritten Aspekts der Erfindung genannten Vorzügen. Vorliegend und im Folgenden wird daher zur Vermeidung von Wiederholungen nur auf ausgewählte Aspekte des erfindungsgemäßen Verfahrens näher eingegangen, im Übrigen gelten die zuvor gemachten und im Zusammenhang mit der erfindungsgemäßen Überwachungsvorrichtung genannten Vorteile und Ausführungen in analoger Weise auch für das erfindungsgemäße Verfahren.

In einer bevorzugten Ausführung des Verfahrens, erfolgt die Durchführung des Verfahrens mit der erfindungsgemäßen Überwachungsvorrichtung des dritten Aspekts der Erfindung.

Eine bevorzugte Weiterbildung des Verfahrens zeichnet sich dadurch aus, dass die Überwachungsvorrichtung ferner eine Steuereinheit aufweist, wobei die Steuereinheit mit der Messeinheit und dem Antrieb signalleitend verbunden ist, wobei die Erzeugung des Alarmsignals und/oder des Stoppsignals zur Abschaltung der Pumpe mittels der Steuereinheit oder der Messeinheit erfolgt.

In einer weiteren bevorzugten Ausführung des Verfahrens, prüft die Überwachungsvorrichtung nach dem Start des Pumpenlaufes, und bevorzugt vor dem Start des Antriebes für die Pumpe, ob innerhalb einer vorgegebenen Warnzeit ein Ruhezustandssignal vorliegt und erzeugt bei Überschreitung der vorgegebenen Warnzeit ohne Erfassung des Ruhezustandssignals ein Warnsignal, wobei das Ruhezustandssignal einen betriebsbereiten Zustand der Messeinheit repräsentiert.

Dies hat den Vorteil, dass wenn eine oder mehrere Komponenten der Messeinheit defekt sind oder nicht in einem funktionsbereiten Zustand sind, diese Fehler behoben werden können, unmittelbar nach dem Start oder bevor der Start der Pumpe ohne funktionsfähige Überwachungsvorrichtung erfolgt.

Eine weitere zweckmäßige Ausgestaltung der Erfindung ist gekennzeichnet durch den weiteren Verfahrensschritt:
- Erfassung des Leckagefluids in einem Auffangbehälter basierend auf wenigstens einer Füllhöhe des Leckagefluids in dem Auffangbehälter mittels der Messeinheit.

Eine bevorzugte Weiterbildung des Verfahrens zeichnet sich dadurch aus, dass die Erzeugung des Alarmsignals und/oder des Stoppsignals zur Abschaltung der Pumpe mittels der Steuereinheit oder der Messeinheit erfolgt, wenn bei einer Erstbefüllung des Auffangbehälters die wenigstens eine Füllhöhe des Leckagefluids im Auffangbehälter nicht in einer vordefinierten Erstbefüllungszeit t₀ erreicht wird.

Eine bevorzugte Weiterbildung des Verfahrens ist gekennzeichnet durch die weiteren Verfahrensschritte bei der Erstbefüllung des Auffangbehälters:
- Prüfen mittels der Messeinheit oder der Steuereinheit, ob eine Erstbefüllungszeit t_{S0} bis zum Erreichen der wenigsten einen Füllhöhe eine erste Ungleichung t_{S0} < t₀ erfüllt, und
- Erfassen von Befüllungszeiten tₛ bis zum Erreichen der wenigsten einen Füllhöhe in weiteren Befüllungszyklen bei Erfüllung der ersten Ungleichung mittels der Messeinheit oder der Steuereinheit.

Nach dem Start des Pumpenlaufes beginnt durch den Druckaufbau im Pumpengehäuse der Durchtritt von Leckagefluid durch die Stopfbuchsdichtung. Das durch die Stopfbuchsdichtung tretende Fluid gelangt als Leckagefluid vom Nassraum des Pumpengehäuses in den Trockenraum des Lagergehäuses. Dort benötigt es eine von der Oberflächenbeschaffenheit und Oberflächentopologie im Inneren des Lagergehäuses abhängige Sammelzeit, um über eine Leckagefluidaustrittsöffnung in den Auffangbehälter zu gelangen. Somit berücksichtigt diese vordefinierte Erstbefüllungszeit t₀ eine Totzeit nach dem Pumpenstart zur Erfassung der Unterschreitung des vorgegebenen Mindestdurchtritts. Vorzugsweise wird diese vordefinierte Erstbefüllungszeit t₀ bei der Inbetriebnahme der Pumpe ermittelt oder ist unabhängig von der Inbetriebnahme in Versuchsreihen, vorzugsweise für den entsprechenden Pumpentyp, ermittelt worden.

Wenn durch die Messeinheit oder die Steuereinheit geprüft wurde, dass die erste Ungleichung t_{S0} < t₀ erfüllt ist und somit der vorgegebene Mindestdurchtritt nicht unterschritten wird, kann der Pumpenlauf weiterlaufen. Vorzugsweise werden während des Pumpenlaufes zur Feststellung der Unterschreitung des vorgegebenen Mindestdurchtritts des Leckagefluids die Befüllungszeiten tₛ bis zum Erreichen der wenigsten einen Füllhöhe in weiteren Befüllungszyklen erfasst.

Eine weitere zweckmäßige Ausgestaltung des Verfahrens ist gekennzeichnet durch die weiteren Verfahrensschritte, ausgeführt durch die Messeinheit oder die Steuereinheit:
- Öffnen eines am Auffangbehälter angeordneten Absperrorgans zum Ablassen des gesammelten Leckagefluids beim Erreichen der wenigsten einen Füllhöhe;
- Schließen des Absperrorgans;
- Erfassen einer Befüllungszykluszeit t_{Z} zwischen zwei aufeinanderfolgenden Befüllungen des Auffangbehälters bis zum Wiedererreichen der wenigsten einen Füllhöhe;
- Erzeugen des Alarmsignals und/oder des Stoppsignals zur Abschaltung der Pumpe, wenn t_{z} eine zweite Ungleichung t_{z} > t₁ erfüllt, wobei t₁ eine vordefinierte Befüllungszykluszeit ist.

Gemäß einer weiteren zweckmäßigen Ausgestaltung des Verfahrens erfüllt die Befüllungszykluszeit t_{Z} die Gleichung t_{Z} = t_{S} + t_{A} , wobei t_{A} eine vordefinierte Ablasszeit zwischen Öffnung und Schließung des Absperrorgans zum Ablassen des gesammelten Leckagefluids ist.

In einer bevorzugten Ausbildung des Verfahrens umfasst dieses ferner die weiteren Verfahrensschritte:
- Erfassung des Leckagefluids mit einem in dem Auffangbehälter beweglich angeordneten Schwimmer;
- Erfassung der wenigsten einen Füllhöhe anhand der Position des Schwimmers mittels der Messeinheit;
- Bestimmung wenigstens einer Position des Schwimmers mittels einer Positionsbestimmungseinrichtung.

Ein weiterer Verfahrensschritt in einer bevorzugten Ausgestaltung des Verfahrens ist die Erfassung der Erstbefüllungszeit t_{S0} und der Befüllungszykluszeit t_{Z} bei Änderung eines Schaltzustandes eines mindestens einen Reed-Kontaktes, wobei die Positionsbestimmungseinrichtung durch den mindestens einen am Auffangbehälter angeordneten Reed-Kontakt und mindestens ein mit dem Schwimmer verbundenes Magnetelement oder durch den mindestens einen am Auffangbehälter angeordneten Reed-Kontakt und einen Schwimmer aus einem magnetischen Material gebildet ist.

Bevorzugt wird in dem erfindungsgemäßen Verfahren ein Schwimmer nach den vorgenannten Ansprüchen oder den beschriebenen Ausführungsvarianten des Schwimmers verwendet.

In einem bevorzugten Verfahrensschritt erfolgt die Erfassung der Erstbefüllungszeit t_{S0}, der Befüllungszeit t_{S} oder der Befüllungszykluszeit t_{Z} mittels der Positionsbestimmungseinrichtung.

Weitere bevorzugte und/oder zweckmäßige Merkmale und Ausgestaltungen der Erfindung ergeben sich aus den Unteransprüchen und der Beschreibung. Besonders bevorzugte Ausführungsformen werden anhand der beigefügten Zeichnung näher erläutert. Anhand der Zeichnungen werden sowohl die erfindungsgemäße Überwachungseinheit als auch das erfindungsgemäße Verfahren erläutert. Hierbei zeigen:
- Fig. 1: eine schematische Darstellung der erfindungsgemäßen Überwachungsvorrichtung;
- Fig. 2: eine schematische Darstellung der erfindungsgemäßen Überwachungsvorrichtung gemäß einer bevorzugten Ausführungsvariante;
- Fig. 3: eine schematische Darstellung der erfindungsgemäßen Überwachungsvorrichtung gemäß einer Ausführungsvariante mit einem Auffangbehälter der Messeinheit;
- Fig. 4: eine schematische Darstellung der erfindungsgemäßen Überwachungsvorrichtung gemäß einer weiteren Ausführungsvariante mit einem Schwimmer und Reed-Kontakt;
- Fig. 5: 5a: eine bevorzugte Ausführungsvariante des Schwimmers in perspektivischer Darstellung und
5b: eine Schnittdarstellung des Schwimmers;
5c: eine weitere Ausführungsvariante des Schwimmers
5d: eine Schnittdarstellung der weiteren Schwimmervariante entlang der Schnittlinie B-B;
- Fig. 6: 6a: eine Ausführungsvariante der Messeinheit der erfindungsgemäßen Überwachungsvorrichtung und
6b: eine Schnittdarstellung der Messeinheit;
6c: eine Schnittdarstellung der Messeinheit mit der Variante des Schwimmers aus Fig. 5c und 5d;
- Fig. 7: 7a bis Fig 7f: Blockdiagramme, welche die Schritte des erfindungsgemäßen Verfahrens und dessen Ausführungsvarianten zeigen.

In den nachfolgenden Figuren wird das Bezugszeichen 2 sowohl für eine Sprinklerpumpe 2 als auch gemäß einem dritten Aspekt der Erfindung für eine Pumpe 2 verwendet. Entsprechend entspricht der Pumpentestlauf dem Pumpenlauf gemäß dem dritten Aspekt der Erfindung.

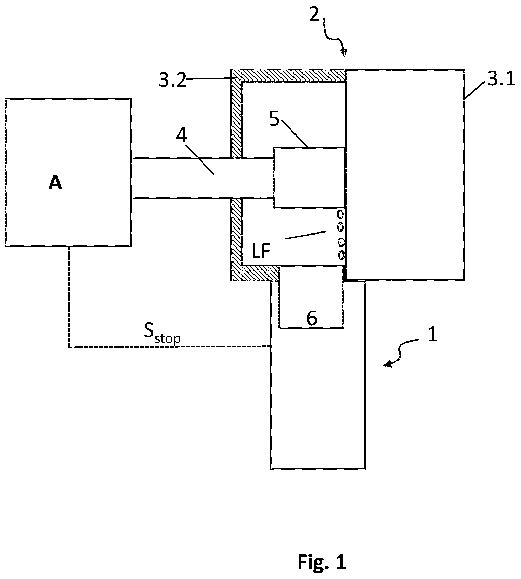

Die Figur 1 zeigt eine schematische Darstellung der erfindungsgemäßen Überwachungsvorrichtung 1 für einen Pumpentestlauf einer Sprinklerpumpe 2 sowie eine Überwachungsvorrichtung 1 für eine Pumpe 2 entsprechend dem dritten Aspekt der Erfindung.

In allen weiteren Figuren sind die beschriebenen Merkmale der Sprinklerpumpe 2 auch die Merkmale der Pumpe 2.

Hierbei umfasst die Sprinklerpumpe 2 oder die Pumpe 2 zumindest ein, einen - in der Zeichnung nicht gezeigten - Nassraum umgebendes Pumpengehäuse 3.1, eine mittels einer Stopfbuchsdichtung 5 gegen das Pumpengehäuse 3.1 gedichtet angeordnete Antriebswelle 4 und einen mit der Antriebswelle 4 mechanisch gekoppelten Antrieb A. Die Stopfbuchsdichtung 5 ist für den Durchtritt von Leckagefluid LF vom Pumpengehäuse 3.1, insbesondere vom Nassraum, in einen Trockenraum ausgebildet und eingerichtet.

Die Überwachungsvorrichtung 1 umfasst eine Messeinheit 6, die zum Erfassen des während des Pumpentestlaufes, oder während des Pumpenlaufes, aus dem Pumpengehäuse 3.1 über die Stopfbuchsdichtung 5 in den einen - in der Zeichnung nicht gezeigten - Trockenraum durchtretenden Leckagefluids LF eingerichtet ist. Die Überwachungsvorrichtung 1 ist ausgebildet, im Fall einer Unterschreitung eines vorgegebenen Mindestdurchtritts ein Stoppsignal Sₛₜₒₚ zur Abschaltung der Sprinklerpumpe 2 oder der Pumpe 2 und/oder ein Alarmsignal zu erzeugen.

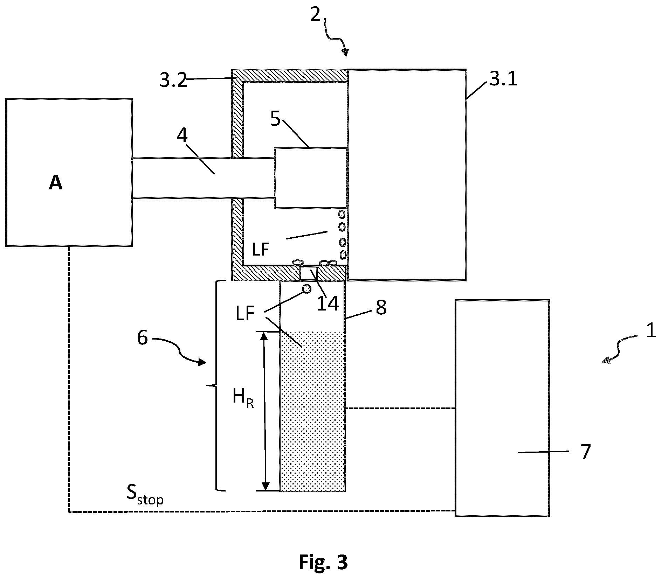

Die Antriebswelle 4 der Sprinklerpumpe 2 oder der Pumpe 2 in der Fig. 1 erstreckt sich von einem Laufrad (nicht dargestellt) in dem Nassraum des Pumpengehäuse 3.1, über den Trockenraum, der beispielsweise von einem Lagergehäuse 3.2 umgeben ist, und Lager (nicht dargestellt) zur Führung der Antriebswelle 4 umfasst, bis zu dem Antrieb A. Dieses Lagergehäuse 3.2 ist vorzugsweise mit dem Pumpengehäuse 3.1 verbunden. Im Bodenbereich des Lagergehäuses 3.2, wo sich das durchgetretene Leckagefluid LF sammeln kann, ist bevorzugt eine Öffnung angeordnet, die es der Messeinheit 6 ermöglicht, durchtretendes Leckagefluid LF zu erfassen. Diese Öffnung ist vorzugsweise als eine - wie in Figur 3 beispielhaft dargestellt - Leckagefluidaustrittsöffnung 14 ausgebildet. Die Überwachungsvorrichtung 1 ist ausgebildet, im Fall einer Unterschreitung eines vorgegebenen Mindestdurchtritts ein Stoppsignal Sₛₜₒₚ zur Abschaltung der Sprinklerpumpe 2 und/oder ein - in der Zeichnung nicht dargestelltes - Alarmsignal zu erzeugen.

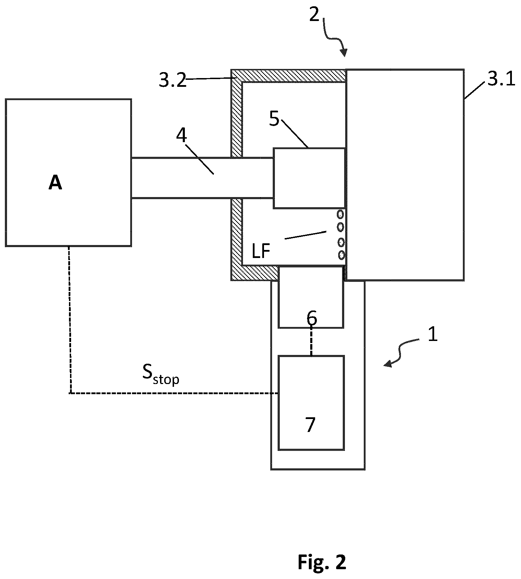

In Fig. 2 ist eine schematische Darstellung einer bevorzugten Ausführungsvariante der Überwachungsvorrichtung 1 dargestellt. Die Überwachungsvorrichtung 1 weist bevorzugt eine Steuereinheit 7 auf. Die Steuereinheit 7 ist mit der Messeinheit 6 und dem Antrieb A signalleitend verbunden, was durch die gestrichelte Linie dargestellt ist. Die Steuereinheit 7 ist ausgebildet, das Alarmsignal und/oder das Stoppsignal Sₛₜₒₚ zur Abschaltung der Sprinklerpumpe 2 oder der Pumpe 2 zu erzeugen. Ferner ist die Steuereinheit 7 vorzugsweise ausgebildet die Sprinklerpumpe 2 oder die Pumpe 2 zu starten und besonders bevorzugt den Pumpentestlauf oder den Pumpenlauf zu steuern.

In einer nicht dargestellten Ausführungsvariante der Überwachungsvorrichtung 1 ist die Messeinheit 6 ausgebildet das Alarmsignal und/oder das Stoppsignal Sₛₜₒₚ zur Abschaltung der Sprinklerpumpe 2 oder der Pumpe 2 zu erzeugen.

Eine schematische Darstellung der erfindungsgemäßen Überwachungsvorrichtung 1 in einer Ausführungsvariante mit einem Auffangbehälter 8 der Messeinheit 6 ist in Fig. 3 dargestellt. Die Messeinheit 6 umfasst diesen zur Erfassung des Leckagefluids LF eingerichteten Auffangbehälter 8. Die Messeinheit 6 ist ausgebildet, basierend auf wenigstens einer Füllhöhe H_{R} das Leckagefluid LF in dem Auffangbehälter 8 zu erfassen. Auch in dieser Ausführungsvariante ist die Steuereinheit 7 mit der Messeinheit 6 und dem Antrieb A signalleitend verbunden, was durch die gestrichelte Linie dargestellt ist. Die Steuereinheit 7 empfängt über diese signalleitende Verbindung Schaltsignale oder erfasste Werte von der Messeinheit 6.

Vorzugsweise wird bei einer Erstbefüllung des Auffangbehälters 8 das Alarmsignal und/oder das Stoppsignal Sₛₜₒₚ zur Abschaltung der Sprinklerpumpe 2 oder der Pumpe 2 mittels der Messeinheit 6 oder der Steuereinheit 7 erzeugt, wenn die wenigstens eine Füllhöhe H_{R} des Leckagefluids LF im Auffangbehälter 8 nicht in einer vordefinierten Erstbefüllungszeit t₀ erreicht wird.

Die Messeinheit 6 oder die Steuereinheit 7 ist vorzugsweise ausgebildet und eingerichtet zu prüfen, ob bei der Erstbefüllung des Auffangbehälters 8 eine Erstbefüllungszeit t_{S0} bis zum Erreichen der wenigsten einen Füllhöhe H_{R} eine erste Ungleichung t_{S0} < t₀ erfüllt wird. Die Messeinheit 6 oder die Steuereinheit 7 sind ferner ausgebildet und eingerichtet, bei Erfüllung der ersten Ungleichung Befüllungszeiten tₛ bis zum Erreichen der wenigsten einen Füllhöhe H_{R} in weiteren Befüllungszyklen zu erfassen. Mit dieser vordefinierten Erstbefüllungszeit tₒ wird die bereits erwähnte Totzeit nach dem Pumpenteststart, oder nach dem Start der Pumpe 2, zur Erfassung der Unterschreitung des vorgegebenen Mindestdurchtritts berücksichtigt. Der Pumpentestlauf bzw. die Pumpe 2 kann weiterlaufen, wenn durch die Messeinheit 6 oder die Steuereinheit 7 geprüft wurde, dass die erste Ungleichung t_{S0} < t₀ erfüllt ist und somit der vorgegebene Mindestdurchtritt nicht unterschritten wird. In diesem Fall werden die Befüllungszeiten tₛ bis zum Erreichen der wenigsten einen Füllhöhe H_{R} in weiteren Befüllungszyklen erfasst.

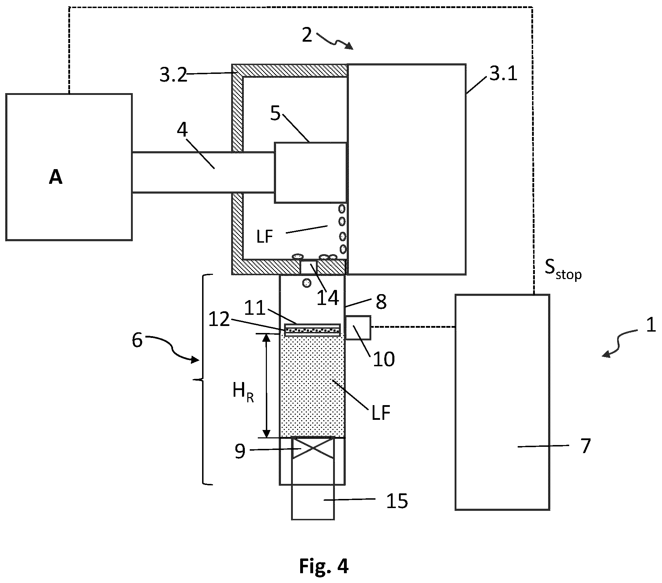

In Fig. 4 sind weitere Ausgestaltungen der erfindungsgemäßen Überwachungsvorrichtung 1 schematisch dargestellt. In der ersten Variante ist die Überwachungsvorrichtung 1 dadurch gekennzeichnet, dass an dem Auffangbehälter 8 ein Absperrorgan 9 angeordnet ist, und die Messeinheit 6 oder die Steuereinheit 7 ausgebildet und eingerichtet ist, beim Erreichen der wenigsten einen Füllhöhe H_{R} das Absperrorgan 9 zum Ablassen des gesammelten Leckagefluids LF zu öffnen und zu schließen, sowie eine Befüllungszykluszeit t_{Z} zwischen zwei aufeinanderfolgenden Befüllungen des Auffangbehälters 8 bis zum Wiedererreichen der wenigsten einen Füllhöhe H_{R} zu erfassen. Das Leckagefluid LF wird vorzugsweise über einen Abfluss 15 abgelassen.

Die Messeinheit 6 oder die Steuereinheit 7 ist vorzugsweise ausgebildet und eingerichtet, das Alarmsignal und/oder das Stoppsignal Sₛₜₒₚ zur Abschaltung der Sprinklerpumpe 2 oder der Pumpe 2 zu erzeugen, wenn t_{z} eine zweite Ungleichung t_{z} > t₁ erfüllt, wobei t₁ eine vordefinierte Befüllungszykluszeit t₁ ist. Die Werte für die vordefinierte Befüllungszykluszeit t₁ werden bevorzugt aus Erfahrungswerten für den entsprechenden Sprinklerpumpentyp oder aus Versuchsreihen bei der Inbetriebnahme der Sprinklerpumpe 2 oder der Pumpe 2 erhalten und in der Messeinheit 6 oder in der Steuereinheit 7 gespeichert.

Vorzugsweise erfüllt die Befüllungszykluszeit t_{Z} die Gleichung t_{Z} = t_{S} + t_{A}, wobei t_{A} eine vordefinierte Ablasszeit zwischen Öffnung und Schließung des Absperrorgans 9 zum Ablassen des gesammelten Leckagefluids LF ist.

Die Werte für die vordefinierte Befüllungszykluszeit t₁ liegen vorzugsweise im Intervall 5 bis 180 Sekunden, besonders bevorzugt im Intervall 30 bis 90 Sekunden oder im Intervall 15 bis 40 Sekunden.

Ferner ist in Fig. 4 eine vorteilhafte weitere Ausführung der Überwachungsvorrichtung 1 schematisch dargestellt, bei der in dem Auffangbehälter 8 ein zum Erfassen des Leckagefluids LF eingerichteter Schwimmer 11 beweglich angeordnet ist. Die Messeinheit 6 ist vorzugsweise ausgebildet, anhand der Position des Schwimmers 11 die wenigstens eine Füllhöhe H_{R} zu erfassen.

Vorzugsweise umfasst die in Fig. 4 dargestellte Messeinheit 6 eine zur Bestimmung wenigstens einer Position des Schwimmers 11 eingerichtete - in der Zeichnung nicht gezeigte - Positionsbestimmungseinrichtung, die wie dargestellt, bevorzugt mindestens einen am Auffangbehälter 8 angeordneten Reed-Kontakt 10 umfasst. Vorzugsweise umfasst diese mindestens ein mit dem Schwimmer 11 verbundenes Magnetelement 12 oder den aus einem magnetischen Material gebildeten Schwimmer 11.

Ferner entnimmt man der Fig. 4 eine weitere zweckmäßige Ausbildung der Überwachungsvorrichtung 1, die dadurch gekennzeichnet ist, dass die Steuereinheit 7 mit dem mindestens einen Reed-Kontakt 10 signalleitend verbunden ist. Die Messeinheit 6 oder die Steuereinheit 7 ist ferner bevorzugt ausgebildet und eingerichtet, die Erstbefüllungszeit t_{S0} und die Befüllungszykluszeiten t_{Z} bei Änderung des Schaltzustandes des mindestens einen Reed-Kontaktes 10 durch das Magnetelement 12 des Schwimmers 11, oder durch den Schwimmer 11 aus einem magnetischen Material, bei Erreichung der wenigsten einen Füllhöhe H_{R} zu erfassen.

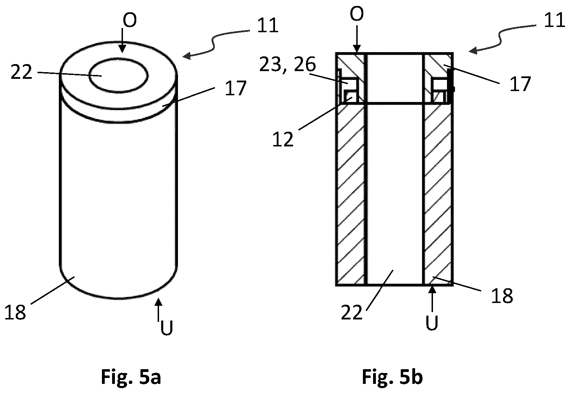

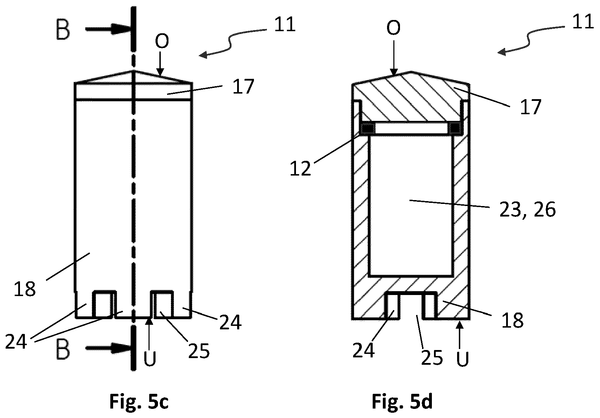

Die Fig. 5a und Fig. 5c zeigen bevorzugte Ausführungsvarianten des in der Fig. 4 gezeigten Schwimmers 11 und die Fig. 5b und 5d zeigen eine Schnittdarstellung der jeweiligen Ausführungsvariante des Schwimmers 11.

Wie die Fig. 5b und 5d zeigen, ist der Schwimmer 11 bevorzugt mit einem allseitig umschlossenen Innenraum 23 ausgebildet.

Die Fig. 5b und 5d zeigen schematisch, dass das mindestens eine Magnetelement 12 vorzugsweise in dem Innenraum 23 des Schwimmers 11 angeordnet ist. Insbesondere ist das Magnetelement 12 als Ringelement ausgebildet. Nicht dargestellt ist die bevorzugte Anordnung von mehr als zwei Magnetelementen 12 im Innenraum 23 des Schwimmers 11. Die Anordnung des mindestens einen Magnetelements 12 oder der mehreren Magnetelemente 12 im Innenraum 23 verhindert eine andernfalls mögliche Korrosion des mindestens einen Magnetelements 12 oder aller im Innenraum 23 angeordneten Magnetelemente 12.

Die dargestellten Ausführungsvarianten des Schwimmers 11 zeigen eine bevorzugte zylinderförmige Ausbildung des Schwimmers 11. Insbesondere ist dieser als Hohlzylinder ausgebildet. Nicht dargestellt sind eine kugelförmige, würfelförmige oder quaderförmige Ausbildung des Schwimmers 11 sowie weitere vorteilhafte geometrische Ausgestaltungen.

Der Schwimmer 11 ist, wie in den Fig. 5a bis 5d dargestellt, bevorzugt mindestens zweiteilig ausgebildet. Der Schwimmer 11 umfasst bevorzugt ein Deckelelement 17 und ein Bodenelement 18. Das Deckelelement 17 und das Bodenelement 18 sind insbesondere derart ausgebildet, dass sie im zusammengefügten Zustand den Innenraum 23 bilden. Vorzugsweise sind das Deckelelement 17 und das Bodenelement 18 form-, kraft- und/oder stoffschlüssig zusammenfügbar eingerichtet. Im zusammengefügten Zustand umschließen das Deckelelement 17 und das Bodenelement 18 jeweils den möglichen Innenraum 23. Bevorzugt sind das Bodenelement 18 und das Deckelelement 17 zusammensteckbar eingerichtet. In Fig. 5d ist eine Ausführungsvariante des Schwimmers 11 dargestellt, in der der Schwimmer 11 als Hohlkörper ausgebildet ist. Der Innenraum 23 wird bevorzugt von einer Ausnehmung 26 gebildet, die sich zumindest teilweise in dem Deckelelement 17 und/oder in dem Bodenelement 18 erstreckt. Dargestellt ist nur die Variante, in der sich die Ausnehmung 26 zumindest teilweise ausschließlich in dem Bodenelement 18 erstreckt.

Wie in den Figuren 5a bis 5d dargestellt, weist der Schwimmer 11 bevorzugt eine Oberseite O und eine Unterseite U auf. Die Oberseite O ist die dem Bodenelement 18 abgewandte Seite des Deckelelements 17 in Richtung der Auftriebskraft. Die Unterseite U ist die dem Deckelelement 17 abgewandte Seite des Bodenelements 18 entgegengesetzt der Richtung der Auftriebskraft.

In der in den Figuren 5c und 5d dargestellten Ausführungsvariante weist das Deckelelement 17 an der Oberseite O, insbesondere der dem Bodenelement 18 abgewandten Seite in Richtung der Auftriebskraft, vorzugsweise eine fluidableitende Oberflächentopologie auf. So ist beispielweise dargestellt, dass zumindest ein Teil der der Oberseite O, des Deckelelements 17 kegelförmig ausgebildet ist. Weitere Varianten der Ausbildung, zumindest eines Teils der Oberseite O des Deckelelements 17, die beispielsweise pyramidenförmig, paraboloid, konvex oder halbkugelförmig ausgebildet sind, sind nicht dargestellt. Der Vorteil solcher Ausgestaltungen des Deckelelements 17 ist, dass eine bessere Verteilung des aufgefangenen Leckagefluids LF im Auffangbehälter 8, insbesondere ein verzögerungsfreies Vorbeifließen an den Außenwandungen des Schwimmers 11, erreicht wird. Dies führt insbesondere zu besser reproduzierbaren Zeiterfassungen der Befüllungszeit t_{S} und der Befüllungszykluszeiten t_{Z}.

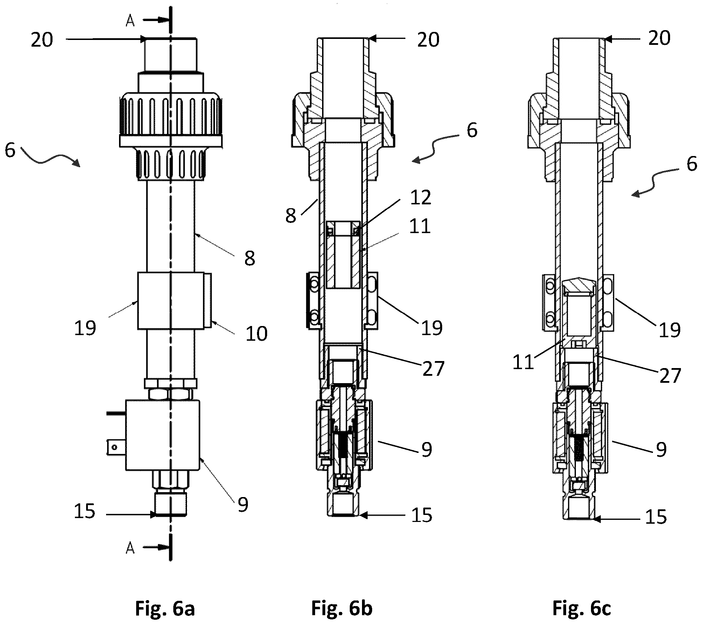

Die Fig. 6c zeigt eine Schnittdarstellung einer Ausführungsvariante der Messeinheit 6 mit dem Schwimmer 11 in der Ausführungsvariante, wie in der Fig. 5c und 5d dargestellt. Die dargestellte Position des Schwimmers 11 im Auffangbehälter 8 ist diejenige nach dem Ablassen des Leckagefluids LF durch Öffnen des Absperrorgans 9. Das Absperrorgan 9 ist in dieser Variante vorzugsweise als Magnetventil ausgebildet. Eine - in der Zeichnung nicht gezeigte - Auflagefläche der Unterseite U bzw. die Unterseite U, vorzugweise an einer - in der Zeichnung nicht gezeigten - unteren Außenseite des Bodenelements 18 des Schwimmers 11, liegt nach dem Ablassen des Leckagefluids LF auf einem Auflageelement 27 auf.

In der in Fig. 5c und 5d dargestellten Ausführungsvariante des Schwimmers 11 weist das Bodenelement 18 an der Unterseite U, nämlich an der dem Deckelelement 17 abgewandten Seite, mindestens ein Distanzelement 24 auf, welches eingerichtet ist, den Durchfluss des Leckagefluids LF zwischen dem Auflageelement 27 des Auffangbehälters 8 und dem Bodenelement 18, insbesondere im Bereich der Unterseite U, zu gewährleisten. Würde die Unterseite U des Schwimmers 11 vollflächig auf dem Auflageelement 27 aufliegen, würde ein Lösen des Schwimmers 11 von dem Auflageelement 27 erschwert und so die Zeiterfassungen der Befüllungszeit t_{S} und der Befüllungszykluszeiten t_{Z} negativ beeinflusst. Die Erfassung der Befüllungszeit t_{S} und der Befüllungszykluszeiten t_{Z} wird hierdurch zuverlässig eingehalten und ist so reproduzierbar und von hoher Genauigkeit. Mit anderen Worten ist der Schwimmer 11 derart eingerichtet, dass dieser nur teilflächig aufliegt.

Besonders bevorzugt bilden, wie in Fig. 5c und 5d dargestellt, mehrerer Distanzelemente 24 einseitig offene Kanäle 25, die sich vorzugsweise über den gesamten Querschnitt des Bodenelements 18 des Schwimmers 11 erstrecken. Diese an der Unterseite U angeordneten einseitig offenen Kanäle 25 ermöglichen den Durchfluss des Leckagefluids LF zwischen dem Auflageelement 27 des Auffangbehälters 8 und der Unterseite U des Bodenelements 18 bei der Befüllung des Auffangbehälters 8.

Ferner zeigen die Fig. 5a und 5b, die Ausführungsvariante des Schwimmers 11, der eine Durchgangsausnehmung 22 aufweist, die sich von dem Deckelelement 17 zu dem Bodenelement 18 erstreckt. Auch dies dient der besseren Verteilung des Leckagefluids LF bei der Befüllung des Auffangbehälters 8, da es nicht nur zwischen der Außenwandung des Schwimmers 11 und der Innenwandung bzw. den Innenwandungen des Auffangbehälters 8 fließen kann, sondern auch in der Durchgangsausnehmung 22.

Wie die Fig. 5b zeigt, ist vorzugsweise im Deckelelement 17 die Ausnehmung 26 als eine erste nutartige Aussparung eingerichtet, die vorzugsweise in Richtung der Außenwandung des hohlzylinderförmigen Bodenelements 18 als offene Nut ausgebildet ist. Weiter bevorzugt ist im Bodenelement 18 eine - in der Zeichnung nicht gezeigte - zweite nutartige Aussparung vorhanden, die vorzugsweise in Richtung der Durchgangsausnehmung 22 als offene Nut ausgebildet ist. Im zusammengefügten Zustand von Deckelelement 17 und Bodenelement 18, bilden vorzugsweise die erste nutartige Aussparung und die zweite nutartige Aussparung den Innenraum 23.

Bevorzugt sind das Deckelelement 17 und das Bodenelement 18 formschlüssig und/oder kraftschlüssig und/oder stoffschlüssig miteinander verbunden. Beispielsweise sind sie miteinander formschlüssig verklebt oder mit einem Dichtungselement ausgebildet, was ein Eindringen von Fluid, insbesondere Leckagefluid LF, beim Befüllen des Auffangbehälters 8 verhindert. Dies verhindert die Korrosion des mindestens einen Magnetelements 12 oder aller im Innenraum 23 angeordneten Magnetelemente 12.

In Figur 6a und 6b ist eine bevorzugte Ausführungsvariante der Messeinheit 6 der erfindungsgemäßen Überwachungsvorrichtung 1 dargestellt. Der Auffangbehälter 8 der Messeinheit 6 ist vorzugsweise als Rohr, beispielsweise aus transparentem Material, vorzugsweise aus PVC, ausgebildet. Das Rohr hat bevorzugt einen in etwa um zwei bis vier Millimeter größeren Innendurchmesser als der Außendurchmesser des als Hohlzylinder ausgebildeten Schwimmers 11.

Der Schwimmer 11 ist in der Schnittzeichnung 6b dargestellt, die den Schnitt durch die Achse A-A zeigt. Die Messeinheit 6 weist die zur Bestimmung wenigstens einer Position des Schwimmers 11 eingerichtete - und in der Zeichnung nicht gezeigte - Positionsbestimmungseinrichtung auf. Diese umfasst bevorzugt den dargestellten Auffangbehälter 8 mit dem daran angeordneten Reed-Kontakt 10 und ein mit dem Schwimmer 11 verbundenes Magnetelement 12.

Die Messeinheit 6 weist ferner vorzugsweise ein Anschlusselement 20 zur Befestigung der Messeinheit 6, beispielsweise an dem Lagergehäuse 3.2, auf. Hierdurch erfolgt die Herstellung einer fluidleitenden Verbindung zwischen der Leckagefluidaustrittsöffnung 14 (s. Fig. 4) und dem Auffangbehälter 8 zur Sammlung des Leckagefluids LF. Die Messeinheit 6 weist vorzugsweise ein Befestigungselement 19 zur Positionierung des mindestens einen Reed-Kontakts 10 auf. Dieses ist eingerichtet, um einzustellen, bei welchem Füllstand bzw . Füllhöhe, insbesondere bei der wenigsten einen Füllhöhe H_{R}, der Reed-Kontakt 10 ein Schaltsignal erzeugt.

Mit diesem Schaltsignal wird bei der Erstbefüllung die Erstbefüllungszeit t_{S0} nach dem Startzeitpunkt des Pumpentestlaufs oder des Pumpenlaufes bestimmt und ferner in den weiteren Befüllungszyklen die Befüllungszykluszeit t_{Z} aus der Zeitdifferenz zwischen zwei aufeinanderfolgenden Schaltsignalen bzw. Befüllungsschaltsignalen ermittelt.

Am Auffangbehälter 8 ist bevorzugt das Absperrorgan 9, bevorzugt in Form eines Magnetventils, angeordnet. Die Messeinheit 6 oder die Steuereinheit 7 ist ausgebildet, beim Erreichen der wenigsten einen Füllhöhe H_{R} und nach Erzeugung des Schaltsignals durch den Reed-Kontakt 10 das Absperrorgan 9 zu öffnen, das gesammelte Leckagefluid LF abzulassen und das Absperrorgan 9 anschließend wieder zu schließen. Das Leckagefluid LF wird vorzugsweise über den Abfluss 15 abgelassen.

In der dargestellten Ausführungsvariante der Messeinheit 6 in Fig. 6a und 6b ist der Reed-Kontakt 10 am Auffangbehälter 8 derart angeordnet, dass im betriebsbereiten Zustand der Messeinheit 6 bei entleertem Auffangbehälter 8 der Reed-Kontakt 10 geschlossen ist und dieser Schaltzustand des Reed-Kontakts 10 als Ruhezustandssignal erfasst wird. Beim Erreichen der wenigsten einen Füllhöhe H_{R} wird der Reed-Kontakt 10 geöffnet und das Befüllungsschaltsignal erzeugt. Diese Position des Schwimmers 11 ist schematisch in Fig. 6b dargestellt. Das gesammelte Leckagefluid LF ist der Vereinfachung halber nicht dargestellt. Mit diesem Befüllungsschaltsignal wird bei der Erstbefüllung die Erstbefüllungszeit t_{S0} nach dem Startzeitpunkt des Pumpentestlauf oder des Pumpenlaufs bestimmt und ferner in den weiteren Befüllungszyklen die Befüllungszykluszeit t_{Z} aus der Zeitdifferenz zwischen zwei aufeinanderfolgenden Befüllungsschaltsignalen ermittelt.

Die Ausführungsvariante der erfindungsgemäßen Überwachungsvorrichtung 1 mit der Messeinheit 6, wie in Fig. 6a und Fig. 6b dargestellt, ist bevorzugt ausgebildet, dass der geöffnete Reed-Kontakt 10 von der Steuereinheit 7 oder der Messeinheit 6 als Befüllungsschaltsignal erfasst wird und die Befüllungszykluszeit t_{Z} aus der Zeitdifferenz zwischen zwei aufeinanderfolgenden Befüllungsschaltsignalen bestimmt wird. Vorzugsweise ist die Überwachungsvorrichtung 1 ausgebildet und eingerichtet, dass der geschlossene Reed-Kontakt 10 bei entleertem Auffangbehälter 8 als Ruhezustandssignal erfasst wird und bei Überschreitung einer vorgegebenen Warnzeit ein Stoppsignal Sₛₜₒₚ zur Abschaltung der Sprinklerpumpe 2 oder der Pumpe 2 erzeugt wird oder kein Startsignal für den Antrieb A der Sprinklerpumpe 2 oder der Pumpe 2 erzeugt wird.

Insbesondere ist die Überwachungsvorrichtung 1 ausgebildet, vor der Erstbefüllung des Auffangbehälters 8 nach Start des Pumpentestlaufs oder des Pumpenlaufes das Absperrorgan 9 für die Ablasszeit t_{A} zu öffnen. Dies ermöglicht, definierte Anfangsbedingungen zur Erfassung des in den Trockenraum durchtretenden Leckagefluids LF zu schaffen. Beispielsweise wird das fehlende Ruhezustandssignal innerhalb der vorgegebenen Warnzeit erfasst, wenn das Absperrorgan 9 oder der Reed-Kontakt 10 defekt sind, oder der Schwimmer 11 sich im Auffangbehälter 8 verklemmt hat. Dies stellt eine kosteneffektive Überwachung der Funktionsfähigkeit der Überwachungsvorrichtung 1 dar, da hierfür keine zusätzlichen Mittel neben den schon vorhandenen benötigt werden.

Die Figur 6c zeigt eine Schnittdarstellung einer Ausführungsvariante der Messeinheit 6 der erfindungsgemäßen Überwachungsvorrichtung 1, die bis auf den Schwimmer 11 identisch mit der in Fig. 6b dargestellten Variante ist. In der Fig. 6b ist der Schwimmer 11 entsprechend der Beschreibung zu Fig. 5a und 5b ausgebildet und in Fig. 6c entsprechend der Beschreibung zu den Figuren 5c und 5d.

Die vorherigen Ausführungen zum konstruktiven Aufbau der erfindungsgemäßen Vorrichtung gelten in analoger Weise auch für die im Folgenden im Zusammenhang mit dem erfindungsgemäßen Verfahren beschriebenen Details.

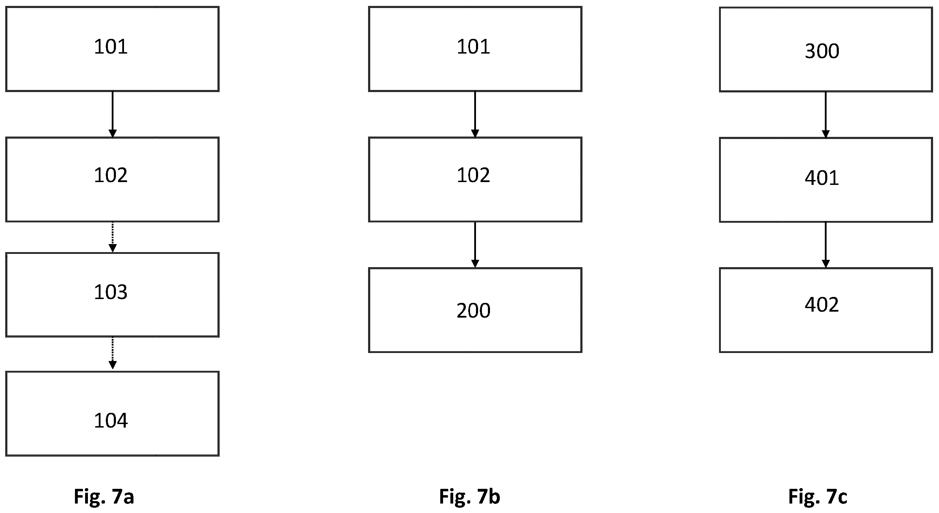

In Figur 7a ist in einem schematischen Ablaufdiagramm das erfindungsgemäße Verfahren zur Überwachung eines Pumpentestlaufes einer Sprinklerpumpe 2 und das erfindungsgemäße Verfahren zur Überwachung einer Pumpe 2 dargestellt. Verschiedene Ausführungsvarianten des Verfahrens zeigen die Figuren 7b bis 7e.Die Sprinklerpumpe 2 oder die Pumpe 2 umfasst zumindest das den Nassraum umgebende Pumpengehäuse 3.1, die mittels der Stopfbuchsdichtung 5 gegen das Pumpengehäuse 3.1 gedichtet angeordnete Antriebswelle 4 und einen mit der Antriebswelle 4 mechanisch gekoppelten, Antrieb A. Die Stopfbuchsdichtung 5 ist für den Durchtritt von Leckagefluid LF vom Pumpengehäuse 3.1 in den Trockenraum ausgebildet und eingerichtet. Das Verfahren weist folgende Verfahrensschritte während des Pumpentestlaufs oder während des Pumpenlaufs auf:
- Erfassung 101 des aus dem Pumpengehäuse 3.1 über die Stopfbuchsdichtung 5 in den Trockenraum durchtretenden Leckagefluids LF mit einer Messeinheit 6 der Überwachungsvorrichtung 1;
- Erzeugung 102 des Alarmsignals und/oder des Stoppsignals Sₛₜₒₚ zur Abschaltung der Sprinklerpumpe 2 oder der Pumpe 2 bei Unterschreitung des vorgegebenen Mindestdurchtritts.

Das Verfahren ist ferner dadurch gekennzeichnet, dass die Überwachungsvorrichtung 1 die Steuereinheit 7 aufweist, wobei die Steuereinheit 7 mit der Messeinheit 6 und dem Antrieb A signalleitend verbunden ist, und wobei die Erzeugung 102 des Alarmsignals und/oder des Stoppsignals Sₛₜₒₚ zur Abschaltung der Sprinklerpumpe 2 oder der Pumpe 2 mittels der Steuereinheit 7 oder der Messeinheit 6 erfolgt.

In einer bevorzugten Ausgestaltung des Verfahrens werden nach dem Start des Pumpentestlaufes oder des Pumpenlaufes, und bevorzugt vor einem regulären, nicht testlaufbedingten Start des Antriebes A, optional folgende Verfahrensschritte durchgeführt:
- Prüfung 103, ob innerhalb einer vorgegebenen Warnzeit ein Ruhezustandssignal vorliegt und
- Erzeugung 104 eines Warnsignals bei Überschreitung der vorgegebenen Warnzeit ohne Erfassung des Ruhezustandssignals,
wobei das Ruhezustandssignal einen betriebsbereiten Zustand der Messeinheit 6 repräsentiert.

Die Fig. 7b zeigt einen weiteren bevorzugten Verfahrensschritt:
- Erfassung 200 des Leckagefluids LF in einem Auffangbehälter 8 basierend auf wenigstens einer Füllhöhe H_{R} des Leckagefluids LF in dem Auffangbehälter 8 mittels der Messeinheit 6.

Die in Fig. 7b gezeigten Schritte der Erfassung 101 und der Erzeugung 102 entsprechen den zuvor erläuterten.

In einer weiteren Ausgestaltung des Verfahrens wird, wie in Fig. 7c dargestellt, mit dem Verfahrensschritt 300 das Alarmsignal und/oder das Stoppsignal Sₛₜₒₚ zur Abschaltung der Sprinklerpumpe 2 oder der Pumpe 2 mittels der Steuereinheit 7 oder der Messeinheit 6 erzeugt, wenn bei einer Erstbefüllung des Auffangbehälters 8 die wenigstens eine Füllhöhe H_{R} des Leckagefluids LF im Auffangbehälter 8 nicht in einer vordefinierten Erstbefüllungszeit t₀ erreicht wird. Ferner zeigt die Fig. 7c weitere optional bevorzugte Verfahrensschritte bei der Erstbefüllung des Auffangbehälters 8:
- Prüfen 401 mittels der Messeinheit 6 oder der Steuereinheit 7, ob eine Erstbefüllungszeit t_{S0} bis zum Erreichen der wenigsten einen Füllhöhe H_{R} eine erste Ungleichung t_{S0} < t₀ erfüllt, und
- Erfassen 402 von Befüllungszeiten tₛ bis zum Erreichen der wenigsten einen Füllhöhe H_{R} in weiteren Befüllungszyklen bei Erfüllung der ersten Ungleichung mittels der Messeinheit 6 oder der Steuereinheit 7.

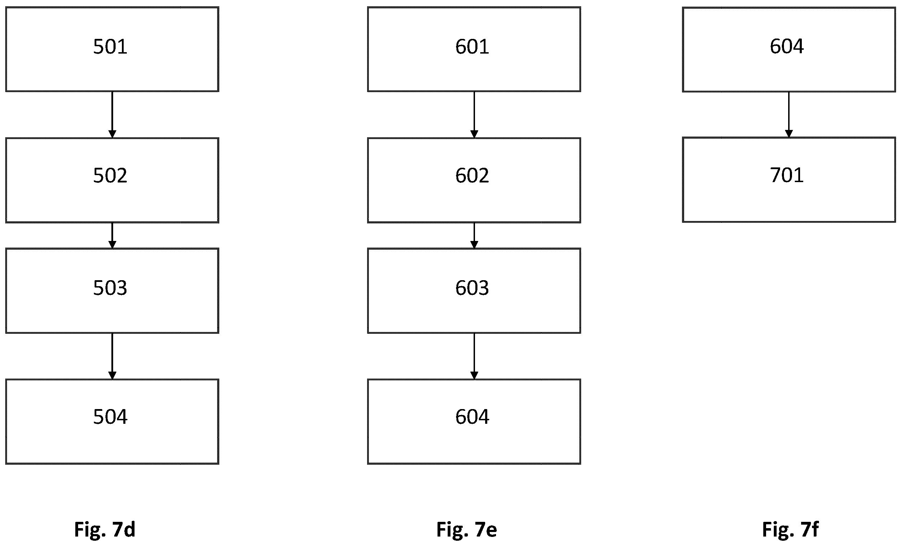

In der Figur 7d werden weitere bevorzugte Verfahrensschritte dargestellt, welche mittels der Messeinheit 6 oder der Steuereinheit 7 ausgeführt werden:
- Öffnen 501 eines am Auffangbehälter 8 angeordneten Absperrorgans 9 zum Ablassen des gesammelten Leckagefluids LF beim Erreichen der wenigsten einen Füllhöhe H_{R} ;
- Schließen 502 des Absperrorgans 9;
- Erfassen 503 einer Befüllungszykluszeit t_{Z} zwischen zwei aufeinanderfolgenden Befüllungen des Auffangbehälters 8 bis zum Wiedererreichen der wenigsten einen Füllhöhe H_{R};
- Erzeugen 504 des Alarmsignals und/oder des Stoppsignals Sₛₜₒₚ zur Abschaltung der Sprinklerpumpe 2 oder der Pumpe 2, wenn t_{z} eine zweite Ungleichung t_{z} > t₁ erfüllt, wobei t₁ eine vordefinierte Befüllungszykluszeit t₁ ist.

Bevorzugt erfüllt die Befüllungszykluszeit t_{Z} die Gleichung t_{Z} = t_{S} + t_{A} , wobei t_{A} eine vordefinierte Ablasszeit zwischen Öffnung und Schließung des Absperrorgans 9 zum Ablassen des gesammelten Leckagefluids LF ist.

Weitere bevorzugte Verfahrensschritte sind in der Figur 7e schematisch dargestellt:
- Erfassung 601 des Leckagefluids LF mit dem in dem Auffangbehälter 8 beweglich angeordneten Schwimmer 11;
- Erfassung 602 der wenigsten einen Füllhöhe H_{R} anhand der Position des Schwimmers 11 mittels der Messeinheit 6; und optional
- Bestimmung 603 wenigstens einer Position des Schwimmers 11 mittels der Positionsbestimmungseinrichtung.

Ferner ist ein weiterer bevorzugter optionaler Verfahrensschritt dargestellt:
- Erfassung 604 der Erstbefüllungszeit t_{S0}, der Befüllungszeit t_{S} oder der Befüllungszykluszeit t_{Z} mittels der Positionsbestimmungseinrichtung.

In der Fig. 7f ist ein weiterer optionaler Verfahrensschritt aufgeführt, der die Erfassung 701 der Erstbefüllungszeit t_{S0} und der Befüllungszykluszeit t_{Z} bei Änderung eines Schaltzustandes des mindestens einen Reed-Kontaktes 10 umfasst, wobei die Positionsbestimmungseinrichtung den mindestens einen am Auffangbehälter 8 angeordneten Reed-Kontakt 10 und mindestens ein mit dem Schwimmer 11 verbundenes Magnetelement 12 umfasst oder den mindestens einen am Auffangbehälter 8 angeordneten Reed-Kontakt 10 und einen Schwimmer 11 aus einem magnetischen Material umfasst.

## Patentansprüche

1. Überwachungsvorrichtung (1) für einen Pumpentestlauf einer Sprinklerpumpe (2), wobei die Sprinklerpumpe (2) zumindest ein, einen Nassraum umgebendes Pumpengehäuse (3.1), eine mittels einer Stopfbuchsdichtung (5) gegen das Pumpengehäuse (3.1) gedichtet angeordnete Antriebswelle (4) und einen mit der Antriebswelle (4) mechanisch gekoppelten Antrieb (A) umfasst, wobei die Stopfbuchsdichtung (5) für den Durchtritt von Leckagefluid (LF) vom Pumpengehäuse (3.1) in einen Trockenraum ausgebildet und eingerichtet ist,
**dadurch gekennzeichnet, dass**
die Überwachungsvorrichtung (1) eine zum Erfassen des während des Pumpentestlaufes aus dem Pumpengehäuse (3.1) über die Stopfbuchsdichtung (5) in den Trockenraum durchtretenden Leckagefluids (LF) eingerichtete Messeinheit (6) umfasst und ausgebildet ist, im Fall einer Unterschreitung eines vorgegebenen Mindestdurchtritts ein Stoppsignal (Sₛₜₒₚ) zur Abschaltung der Sprinklerpumpe (2) und/oder ein Alarmsignal zu erzeugen.

2. Überwachungsvorrichtung (1) nach Anspruch 1, **dadurch gekennzeichnet, dass** die Überwachungsvorrichtung (1) ferner eine Steuereinheit (7) aufweist, wobei die Steuereinheit (7) mit der Messeinheit (6) und dem Antrieb (A) signalleitend verbunden ist, wobei die Steuereinheit (7) oder die Messeinheit (6) ausgebildet und eingerichtet ist, das Alarmsignal und/oder das Stoppsignal (Sₛₜₒₚ) zur Abschaltung der Sprinklerpumpe (2) zu erzeugen.

3. Überwachungsvorrichtung (1) nach einem der Ansprüche 1 oder 2, **dadurch gekennzeichnet, dass** die Messeinheit (6) einen zur Erfassung des Leckagefluids (LF) eingerichteten Auffangbehälter (8) umfasst und die Messeinheit (6) ausgebildet ist, basierend auf wenigstens einer Füllhöhe (H_{R}) das Leckagefluid (LF) in dem Auffangbehälter (8) zu erfassen.

4. Überwachungsvorrichtung (1) nach Anspruch 3, **dadurch gekennzeichnet, dass** die Messeinheit (6) oder die Steuereinheit (7) eingerichtet ist, bei einer Erstbefüllung des Auffangbehälters (8) das Alarmsignal und/oder das Stoppsignal (Sₛₜₒₚ) zur Abschaltung der Sprinklerpumpe (2) zu erzeugen, wenn die wenigstens eine Füllhöhe (H_{R}) des Leckagefluids (LF) im Auffangbehälter (8) nicht in einer vordefinierten Erstbefüllungszeit t₀ erreicht wird.

5. Überwachungsvorrichtung (1) nach Anspruch 4, **dadurch gekennzeichnet, dass** die Messeinheit (6) oder die Steuereinheit (7) ausgebildet und eingerichtet ist zu prüfen, ob bei der Erstbefüllung des Auffangbehälters (8) eine Erstbefüllungszeit t_{S0} bis zum Erreichen der wenigsten einen Füllhöhe (H_{R}) eine erste Ungleichung t_{S0} < t₀ erfüllt, und ferner ausgebildet und eingerichtet ist, bei Erfüllung der ersten Ungleichung, Befüllungszeiten tₛ bis zum Erreichen der wenigsten einen Füllhöhe (H_{R}) in weiteren Befüllungszyklen zu erfassen.

6. Überwachungsvorrichtung (1) nach Anspruch 5, **dadurch gekennzeichnet, dass** an dem Auffangbehälter (8) ein Absperrorgan (9) angeordnet ist, und die Messeinheit (6) oder die Steuereinheit (7) ausgebildet und eingerichtet ist, beim Erreichen der wenigsten einen Füllhöhe (H_{R}) das Absperrorgan (9) zum Ablassen des gesammelten Leckagefluids (LF) zu öffnen und im Anschluss zu schließen, sowie eine Befüllungszykluszeit t_{Z} zwischen zwei aufeinanderfolgenden Befüllungen des Auffangbehälters (8) bis zum Wiederreichen der wenigsten einen Füllhöhe (H_{R}) zu erfassen, und das Alarmsignal und/oder das Stoppsignal (Sₛₜₒₚ) zur Abschaltung der Sprinklerpumpe (2) zu erzeugen, wenn t_{z} eine zweite Ungleichung t_{z} > t₁ erfüllt, wobei t₁ eine vordefinierte Befüllungszykluszeit t₁ ist.

7. Überwachungsvorrichtung (1) nach Anspruch 6, **dadurch gekennzeichnet, dass** die Befüllungszykluszeit t_{Z} die Gleichung t_{Z} = t_{S} + t_{A} erfüllt, wobei t_{A} eine vordefinierte Ablasszeit zwischen Öffnung und Schließung des Absperrorgans (9) zum Ablassen des gesammelten Leckagefluids (LF) ist.

8. Überwachungsvorrichtung (1) nach einem der Ansprüche 1 bis 7, **dadurch gekennzeichnet, dass** in dem Auffangbehälter (8) ein zum Erfassen des Leckagefluids (LF) eingerichteter Schwimmer (11) beweglich angeordnet ist und die Messeinheit (6) ausgebildet ist, anhand der Position des Schwimmers (11) die wenigstens eine Füllhöhe (H_{R}) zu erfassen.

9. Überwachungsvorrichtung (1) nach Anspruch 8, **dadurch gekennzeichnet, dass** die Messeinheit (6) eine zur Bestimmung wenigstens einer Position des Schwimmers (11) eingerichtete Positionsbestimmungseinrichtung umfasst.

10. Überwachungsvorrichtung (1) nach Anspruch 9, **dadurch gekennzeichnet, dass** die Positionsbestimmungseinrichtung mindestens einen am Auffangbehälter (8) angeordneten Reed-Kontakt (10) und mindestens ein mit dem Schwimmer (11) verbundenes Magnetelement (12) oder den aus einem magnetischen Material gebildeten Schwimmer (11) umfasst.

11. Überwachungsvorrichtung (1) nach Anspruch 10, **dadurch gekennzeichnet, dass** die Steuereinheit (7) mit dem mindestens einen Reed-Kontakt (10) signalleitend verbunden ist, und die Messeinheit (6) oder die Steuereinheit (7) ferner ausgebildet und eingerichtet ist, die Erstbefüllungszeit t_{S0} und die Befüllungszykluszeiten t_{z} bei Änderung des Schaltzustandes des mindestens einen Reed-Kontaktes (10) durch das Magnetelement (12) des Schwimmers (11), oder durch den Schwimmer (11) aus einem magnetischen Material, bei Erreichung der wenigsten einen Füllhöhe (H_{R}), zu erfassen.

12. Überwachungsvorrichtung (1) nach einem der Ansprüche 10 bis 11, **dadurch gekennzeichnet, dass** der Schwimmer (11) mit einem allseitig umschlossenen Innenraum (23) ausgebildet ist, in dem das mindestens eine Magnetelement (12) angeordnet ist.

13. Überwachungsvorrichtung (1) nach einem der Ansprüche 8 bis 12, **dadurch gekennzeichnet, dass** der Schwimmer (11) vollkörperförmig oder hohlkörperförmig ausgebildet ist und eine Zylinder-, Kugel-, Würfel- oder Quaderform aufweist.

14. Überwachungsvorrichtung (1) nach Anspruch 12 oder 13, **dadurch gekennzeichnet dass** der Schwimmer (11) mindestens zweiteilig ausgebildet ist und ein Deckelelement (17) und ein Bodenelement (18) umfasst, wobei das Deckelelement (17) und das Bodenelement (18) derart ausgebildet sind, dass sie im zusammengefügten Zustand den Innenraum (23) bilden.

15. Überwachungsvorrichtung (1) nach einem der Ansprüche 12 bis 14, **dadurch gekennzeichnet, dass** der Innenraum (23) von einer Ausnehmung (26) gebildet ist, die sich zumindest teilweise in dem Deckelelement (17) und/oder in dem Bodenelement (18) erstreckt.

16. Überwachungsvorrichtung (1) nach Anspruch 15, **dadurch gekennzeichnet, dass** das Deckelelement (17) an der dem Bodenelement (18) abgewandten Seite eine fluidableitende Oberflächentopologie aufweist.

17. Überwachungsvorrichtung (1) nach Anspruch 14 oder 15, **dadurch gekennzeichnet, dass** das Bodenelement (18) an der dem Deckelelement (17) abgewandten Seite mindestens ein Distanzelement (24) aufweist, welches den Durchfluss des Leckagefluids (LF) zwischen einem Auflageelement (27) des Auffangbehälters (8) und dem Bodenelement (18) gewährleistet.

18. Überwachungsvorrichtung (1) nach einem der Ansprüche 14 bis 17, **dadurch gekennzeichnet, dass** der Schwimmer (11) eine Durchgangsausnehmung (22) aufweist, die sich von dem Deckelelement (17) zu dem Bodenelement (18) erstreckt.

19. Überwachungsvorrichtung (1) nach einem der Ansprüche 8 bis 18, **dadurch gekennzeichnet, dass** die Querschnittsgeometrie des Auffangbehälters (8) derart zumindest im Wesentlichen ähnlich zur Querschnittsgeometrie der Außenwandungen des Schwimmers (11) ausgebildet ist, sodass die Außenwandungen des Schwimmers (11) allseitig von den Innenwandungen des Auffangbehälters (8) unter Einhaltung eines Minimalabstandes voneinander beabstandet sind.

20. Verfahren zur Überwachung eines Pumpentestlaufes einer Sprinklerpumpe (2), wobei die Sprinklerpumpe (2) zumindest ein, einen Nassraum umgebendes Pumpengehäuse (3.1), eine mittels einer Stopfbuchsdichtung (5) gegen das Pumpengehäuse (3.1) gedichtet angeordnete Antriebswelle (4) und einen mit der Antriebswelle (4) mechanisch gekoppelten Antrieb (A) umfasst, wobei die Stopfbuchsdichtung (5) für den Durchtritt von Leckagefluid (LF) vom Pumpengehäuse (3.1) in den Trockenraum ausgebildet und eingerichtet ist, mit folgenden Verfahrensschritten:
• Erfassung (101) des während des Pumpentestlaufes aus dem Pumpengehäuse (3.1) über die Stopfbuchsdichtung (5) in den Trockenraum durchtretenden Leckagefluids (LF) mit einer Messeinheit (6) einer Überwachungsvorrichtung (1);
• Erzeugung (102) eines Alarmsignals und/oder eines Stoppsignals (Sₛₜₒₚ) zur Abschaltung der Sprinklerpumpe (2) bei Unterschreitung eines vorgegebenen Mindestdurchtritts.

21. Verfahren nach Anspruch 20, **dadurch gekennzeichnet, dass** die Überwachungsvorrichtung (1) ferner eine Steuereinheit (7) aufweist, wobei die Steuereinheit (7) mit der Messeinheit (6) und dem Antrieb (A) signalleitend verbunden ist, wobei die Erzeugung (102) des Alarmsignals und/oder des Stoppsignals (Sₛₜₒₚ) zur Abschaltung der Sprinklerpumpe (2) mittels der Steuereinheit (7) oder der Messeinheit (6) erfolgt.

22. Verfahren nach Anspruch 21, **gekennzeichnet durch** den weiteren Verfahrensschritt:
• Erfassung (200) des Leckagefluids (LF) in einem Auffangbehälter (8) basierend auf wenigstens einer Füllhöhe (H_{R}) des Leckagefluids (LF) in dem Auffangbehälter (8) mittels der Messeinheit (6).

23. Verfahren nach Anspruch 22, **gekennzeichnet durch** den weiteren Verfahrensschritt:
• Erzeugung (300) des Alarmsignals und/oder des Stoppsignals (Sₛₜₒₚ) zur Abschaltung der Sprinklerpumpe (2) mittels der Steuereinheit (7) oder der Messeinheit (6), wenn bei einer Erstbefüllung des Auffangbehälters (8) die wenigstens eine Füllhöhe (H_{R}) des Leckagefluids (LF) im Auffangbehälter (8) nicht in einer vordefinierten Erstbefüllungszeit t₀ erreicht wird.

24. Verfahren nach Anspruch 22 oder 23, **gekennzeichnet durch** die weiteren Verfahrensschritte bei der Erstbefüllung des Auffangbehälters (8):
• Prüfen (401) mittels der Messeinheit (6) oder der Steuereinheit (7), ob eine Erstbefüllungszeit t_{S0} bis zum Erreichen der wenigsten einen Füllhöhe (H_{R}) eine erste Ungleichung t_{S0} < t₀ erfüllt, und
• Erfassen (402) von Befüllungszeiten tₛ bis zum Erreichen der wenigsten einen Füllhöhe (H_{R}) in weiteren Befüllungszyklen bei Erfüllung der ersten Ungleichung mittels der Messeinheit (6) oder der Steuereinheit (7).

25. Verfahren nach einem der Ansprüche 22 bis 24, **gekennzeichnet durch** die weiteren Verfahrensschritte, ausgeführt durch die Messeinheit (6) oder die Steuereinheit (7):
• Öffnen (501) eines am Auffangbehälter (8) angeordneten Absperrorgans (9) zum Ablassen des gesammelten Leckagefluids (LF) beim Erreichen der wenigsten einen Füllhöhe (H_{R});
• Schließen (502) des Absperrorgans (9);
• Erfassen (503) einer Befüllungszykluszeit t_{Z} zwischen zwei aufeinanderfolgenden Befüllungen des Auffangbehälters (8) bis zum Wiedererreichen der wenigsten einen Füllhöhe (H_{R});
• Erzeugen (504) des Alarmsignals und/oder des Stoppsignals (Sₛₜₒₚ) zur Abschaltung der Sprinklerpumpe (2), wenn t_{z} eine zweite Ungleichung t_{z} > t₁ erfüllt, wobei t₁ eine vordefinierte Befüllungszykluszeit t₁ ist.

26. Verfahren nach Anspruch 25, **dadurch gekennzeichnet, dass** die Befüllungszykluszeit t_{Z} die Gleichung t_{Z} = t_{S} + t_{A} erfüllt, wobei t_{A} eine vordefinierte Ablasszeit zwischen Öffnung und Schließung des Absperrorgans (9) zum Ablassen des gesammelten Leckagefluids (LF) ist.

27. Verfahren nach einem der Ansprüche 22 bis 26 mit den weiteren Verfahrensschritten:
• Erfassung (601) des Leckagefluids (LF) mit einem in dem Auffangbehälter (8) beweglich angeordneten Schwimmer (11);
• Erfassung (602) der wenigsten einen Füllhöhe (H_{R}) anhand der Position des Schwimmers (11) mittels der Messeinheit (6);
• Bestimmung (603) wenigstens einer Position des Schwimmers (11) mittels einer Positionsbestimmungseinrichtung.

28. Verfahren nach Anspruch 27, **gekennzeichnet durch** den weiteren Verfahrensschritt:
• Erfassung (701) der Erstbefüllungszeit t_{S0} und der Befüllungszykluszeit t_{Z} bei Änderung eines Schaltzustandes eines mindestens einen Reed-Kontaktes (10), wobei die Positionsbestimmungseinrichtung durch den mindestens einen am Auffangbehälter (8) angeordneten Reed-Kontakt (10) und mindestens ein mit dem Schwimmer (11) verbundenes Magnetelement (12) oder durch den mindestens einen am Auffangbehälter (8) angeordneten Reed-Kontakt (10) und einen Schwimmer (11) aus einem magnetischen Material gebildet ist.

29. Wasserlöschanlage, mit einer Überwachungsvorrichtung (1) nach einem der Ansprüche 1 bis 15.
